(19) **Europäisches Patentamt / European Patent Office / Office européen des brevets**

(11) **EP 4 610 931 A1**

(12) **EUROPEAN PATENT APPLICATION**
published in accordance with Art. 153(4) EPC

(43) Date of publication:
**03.09.2025  Bulletin 2025/36**

(21) Application number: **23898049.4**

(22) Date of filing: **05.10.2023**

(51) International Patent Classification (IPC):
**G06T 15/00** (2011.01)     **G06T 15/80** (2011.01)
**G06T 15/04** (2011.01)     **G06T 17/20** (2006.01)
**G06T 1/20** (2006.01)       **G06T 1/60** (2006.01)
**G06T 15/50** (2011.01)

(52) Cooperative Patent Classification (CPC):
**G06T 1/20; G06T 1/60; G06T 15/00; G06T 15/04;
G06T 15/50; G06T 15/80; G06T 17/20**

(86) International application number:
**PCT/KR2023/015364**

(87) International publication number:
**WO 2024/117515 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.11.2022  KR 20220163436
22.12.2022  KR 20220182271**

(71) Applicant: **Samsung Electronics Co., Ltd.
Suwon-si, Gyeonggi-do 16677 (KR)**

(72) Inventors:
• **PARK, Jongpil**
  **Suwon-si Gyeonggi-do 16677 (KR)**
• **KIM, Jeoungju**
  **Suwon-si Gyeonggi-do 16677 (KR)**
• **LIM, Jinho**
  **Suwon-si Gyeonggi-do 16677 (KR)**

(74) Representative: **HGF
HGF Limited
1 City Walk
Leeds LS11 9DX (GB)**

(54) **ELECTRONIC DEVICE AND METHOD FOR GENERATING RENDERING IMAGE ACCORDING TO SCENARIO CONTEXT**

(57)    A processor of an electronic device may, when instructions are executed: recognize an object corresponding to a user in an image frame provided by an application; identify a scenario context of the application; set, on the basis of the scenario context, a weight for each of a plurality of parts of the object; determine whether the scenario context is a first type or a second type; when the scenario context is the first type, perform a first rendering process on the image frame to improve rendering quality of a part having a weight that is greater than a reference value from among the plurality of parts; and when the scenario context is the second type, perform a second rendering process on the image frame to increase the frame rate for a part having a weight that is greater than the reference value from among the plurality of parts.

FIG. 11B

**Description**

**[Technical Field]**

Embodiments of the present disclosure relate to an electronic device and a method for generating a rendering image according to a scenario context.

**[Background Art]**

A movement of a user may be tracked for an interaction between reality and virtual world in virtual reality (VR), augmented reality (AR), and/or mixed reality (MR). The tracked movement of the user may be input to a processor and reflected in a graphic. A rendering quality of the graphic may be determined based on a plurality of elements.

The above-described information may be provided as a related art for the purpose of helping to understand the present disclosure. No claim or determination is raised as to whether any of the above-described description may be applied as a prior art related to the present disclosure.

**[Disclosure]**

**[Technical Solution]**

In embodiments, an electronic device is provided. The electronic device may comprise memory configured to store instructions, and at least one processor operatively coupled to the memory. The at least one processor, when executing the instructions, may be configured to recognize an object corresponding to a user in an image frame provided by an application. The at least one processor may identify a scenario context of the application. The at least one processor may set a weight for each of a plurality of portions of the object based on the identified scenario context. The at least one processor may determine whether the scenario context is a first type or a second type. The at least one processor may, in a case that the scenario context is the first type, perform a first rendering process on the image frame so as to improve a rendering quality of a portion that has a weight greater than a reference value, among the plurality of portions. The at least one processor may, in a case that the scenario context is the second type, perform a second rendering process on the image frame so as to increase a frame rate for the portion that has the weight greater than the reference value, among the plurality of portions.

In embodiments, a method by an electronic device is provided. The method may comprise recognizing an object corresponding to a user in an image frame provided by an application. The method may comprise identifying a scenario context of the application. The method may comprise setting a weight for each of a plurality of portions of the object based on the identified scenario context. The method may comprise determining whether the scenario context is a first type or a second type. The method may comprise, in a case that the scenario context is the first type, performing a first rendering process on the image frame so as to improve a rendering quality of the portion that has a weight greater than a reference value, among the plurality of portions. The method may comprise, in a case that the scenario context is the second type, performing a second rendering process on the image frame so as to increase a frame rate for the portion that has the weight greater than the reference value, among the plurality of portions.

In embodiments, a non-transitory storage medium is provided. The non-transitory storage medium may comprise memory configured to store instructions. The instructions, when executed by at least one processor, may cause an electronic device to recognize an object corresponding to a user in an image frame provided by an application, identify a scenario context of the application, set a weight for each of a plurality of portions of the object based on the scenario context, determine whether the scenario context is a first type or a second type, in a case that the scenario context is the first type, perform a first rendering process on the image frame so as to improve a rendering quality of a portion that has a weight greater than a reference value, among the plurality of portions, and in a case that the scenario context is the second type, perform a second rendering process on the image frame so as to increase a frame rate for the portion that has the weight greater than the reference value, among the plurality of portions.

**[Description of the Drawings]**

FIG. 1 is a block diagram of an electronic device in a network environment according to embodiments.
FIG. 2 illustrates an example of a remote display device according to embodiments.
FIG. 3A illustrates an example of a mesh model according to embodiments.
FIG. 3B illustrates an example of a display of a shadow according to embodiments.

FIG. 3C illustrates an example of image processing for representing light reflection, according to embodiments.

FIG. 3D illustrates an example of a frame rate, according to embodiments.

FIG. 4 illustrates an example of a scenario context for a sports match according to embodiments.

FIG. 5 illustrates an example of a scenario context interacting with another object according to embodiments.

FIG. 6 illustrates an example of a scenario context for communication with another avatar according to embodiments.

FIG. 7 illustrates an example of a scenario context for communication conducted through a voice, according to embodiments.

FIG. 8 illustrates an example of a scenario context for communication conducted through a gesture of an avatar according to embodiments.

FIG. 9 illustrates an example of a scenario context for communication conducted through sign language, according to embodiments.

FIG. 10 illustrates an example of a joint structure of an avatar for identifying a weight, according to embodiments.

FIG. 11A illustrates a flow of an operation of an electronic device for identifying a weight, according to embodiments.

FIG. 11B illustrates a flow of an operation of an electronic device for performing a rendering process according to a scenario context and a weight according to embodiments.

## [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a part of a virtual image (e.g., an object image, a background image), terms referring to a virtual image (e.g., an image of virtual reality, an image of augmented reality, an image of mixed reality), terms referring to a specified value (e.g., a reference value, a threshold value), and the like used, in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A to 'B' refers to at least one of elements from A (including A) to B (including B). Hereinafter, 'C' and/or 'D' means including at least one of 'C' or 'D', that is, {'C', 'D', and 'C' and 'D'}.

Prior to describing embodiments of the present disclosure, terms necessary to describe operations of an electronic device according to the embodiments are defined. A remote display device may be a device that displays images such as virtual reality, augmented reality, and mixed reality. For example, the remote display device may be a head-mounted display (HMD). For example, the remote display device may be augmented reality (AR) glasses.

Hereinafter, various embodiments disclosed in the present document will be described with reference to an attached drawing. For convenience of explanation, components illustrated in the drawing may be exaggerated or decreased in size, and the present invention is not necessarily limited to what is illustrated.

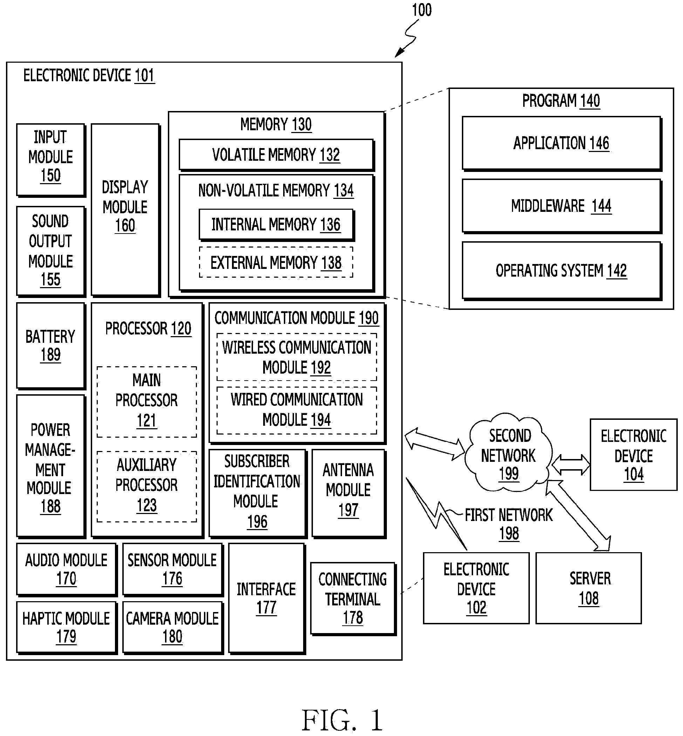

FIG. 1 is a block diagram of an electronic device in a network environment according to embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

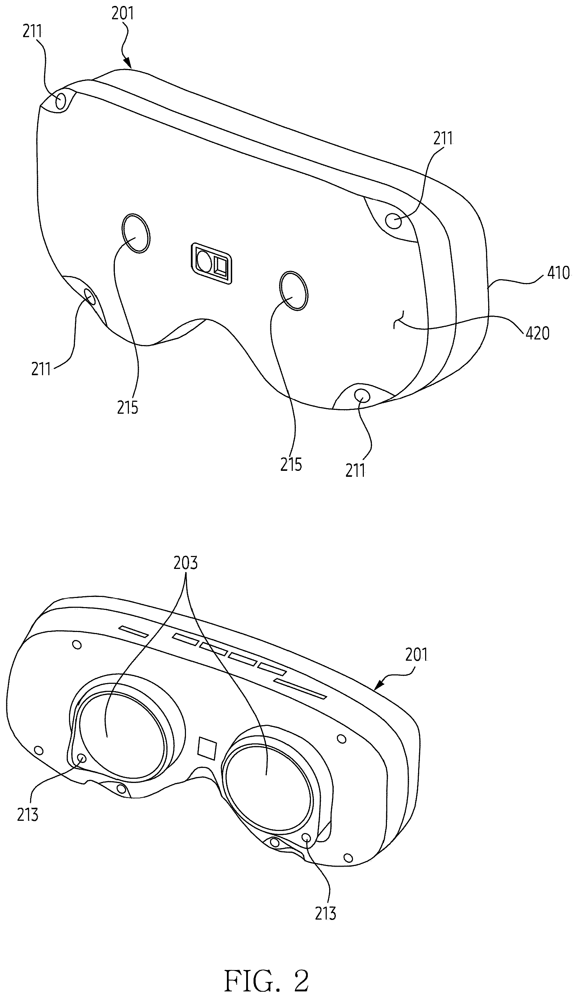

FIG. 2 illustrates an example of a remote display device (e.g., the electronic device 101 of FIG. 1) according to embodiments. For the remote display device, descriptions of the electronic device 101 may be referenced.

Referring to FIG. 2, in a case that a remote display device 201 is worn by a user, the remote display device 201 may be in a shape closely contacted with eyes of the user. A display 203 may display a virtual image. A first camera unit 211, a second camera unit 213, and a third camera unit 215 may be included in the remote display device 201. The display 203 and the second camera unit 213 may be disposed on a first surface of the remote display device 201. The first camera unit 211 and the third camera unit 215 may be disposed on a second surface of the remote display device 201. The first surface may be disposed toward a face of the user in a case that the remote display device 201 is worn by the user. The second surface may be opposite to the first surface. The second surface may be a surface spaced apart from the first surface.

The display 203 may include, for example, a liquid crystal display (LCD), a digital mirror device (DMD), a liquid crystal on silicon (LCos), an organic light emitting diode (OLED), or a micro light emitting diode (micro LED). Although not illustrated, in a case that the display 203 is made of one of the liquid crystal display, the digital mirror device, or the liquid crystal on silicon, the remote display device 201 may include a light source that irradiates light to a screen output area of the display 203. In another embodiment, in a case that the display 203 may generate light by itself, for example, in a case that the display 203 is made of one of the organic light emitting diode or the micro LED, the remote display device 201 may provide the user with a virtual video of a good quality, without including a separate light source. In an embodiment, if the display 203 is implemented as the organic light emitting diode or the micro LED, a light source is unnecessary, and thus the remote display device 201 may be lightweight. The remote display device 201 may include the display 203. The user may use the remote display device 201 in a state of wearing the remote display device 201 on the face of the user. A first transparent member and/or a second transparent member may be formed of a glass plate, a plastic plate, or a polymer, and may be manufactured to be transparent or translucent. According to an embodiment, the first transparent member may be disposed to face a right eye of the user, and the second transparent member may be disposed to face a left eye of the user. According to various embodiments, in a case that the display 203 is transparent, the display 203 may be disposed at a position facing the eyes of the user to configure a screen display unit. A lens may serve to adjust a focus of a screen outputted to a display. For example, the lens may be a fresnel lens. The lens may be a pancake lens. The lens may be a multi-channel lens.

The first camera unit 211 may include a recognition camera. The recognition camera may be used for head tracking, hand detection and tracking, controller tracking, and spatial recognition of a 3 degree of freedom (DOF) and a 6 degree of freedom (DOF). The recognition camera may be a global shutter (GS) camera. Since a stereo camera is required for the head tracking and the spatial recognition, two or more GS cameras may be used. The GS camera may detect a fast motion and a fine motion. The GS camera may decrease a motion blur phenomenon. The first camera unit 211 may perform a spatial recognition for the 6 degree of freedom (DOF) and a simultaneous localization and mapping (SLAM) function through depth capture. Additionally, the first camera unit 211 may perform a user gesture recognition function. According to an embodiment, the at least one processor may track light generated from a light source of a controller through the first camera unit 211. The at least one processor may track a movement of the controller through the first camera unit 211.

The second camera unit 213 may include an eye tracking (ET) camera. The eye tracking (ET) camera may detect and track a pupil. The eye tracking (ET) camera may be used for purpose of positioning a center of a virtual video projected on augmented reality (AR) glasses according to a direction in which the pupil of AR glasses wearer is staring. The second camera unit 213 may include the global shutter (GS) camera to detect the pupil and track a fast pupil movement. The global shutter (GS) camera may detect the fast motion and the fine motion. The global shutter (GS) camera may decrease the motion blur phenomenon. The eye tracking (ET) camera may be installed for the left eye and the right eye, respectively. Performance and specification of a left eye camera and a right eye camera may be identical.

The third camera unit 215 may include a camera for capturing. The third camera unit 215 is referred to as a high resolution (HR) or a photo video (PV), and a high resolution camera may be used. The third camera unit 215 may be used as a camera equipped with functions for obtaining high-quality images such as an auto focus (AF) function, an optical image stabilization (OIS), and the like. The third camera unit 215 may be the GS camera. The third camera unit 215 may be a rolling shutter (RS) camera. A light detection and ranging (Lidar) sensor may be disposed instead of the camera at a position where the third camera unit 215 is disposed.

The remote display device 201 may include a microphone, a speaker, a battery, an antenna, and/or a sensor. The sensor may include an acceleration sensor, a gyro sensor, and/or a touch sensor.

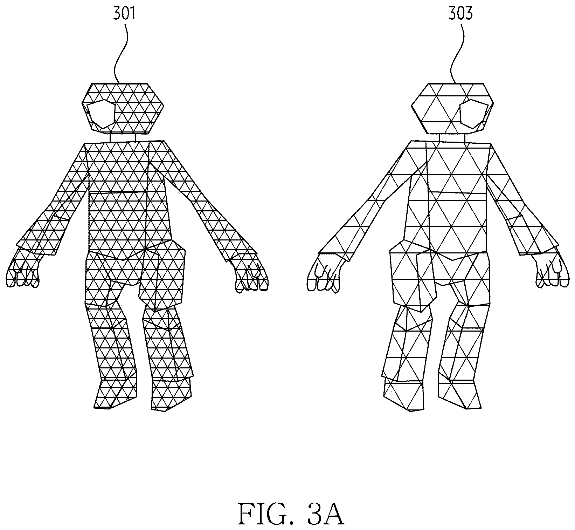

FIG. 3A illustrates an example of a mesh model according to embodiments.

Referring to FIG. 3A, a mesh model 301 may be configured based on a basic polygon having a first size. The mesh model 303 may be configured based on a basic polygon having a second size larger than the first size. The mesh model may be a method of representing a surface of an object through a surface consisting of a plurality of polygons so as to display the object included in an image in three dimensions.

According to an embodiment, the mesh model may include information such as vertex information and corner information. The vertex information may include coordinates on a 3-dimension (3D) of points identified to represent the surface of the object. The corner information may include position information of lines indicated by the vertex information. The vertices and corners may represent a basic polygon. For example, the basic polygon may be a triangle. As the number of the vertices increases, the amount of computation of a central processing unit (CPU) and the amount of computation of a graphic processing unit (GPU) may increase. As the number of the vertices increases, a rendering quality may improve. This is because it can express the curvature of the object well. The rendering quality may be a degree to which a rendered image is implemented similar to an actual image. As the number of the vertices increases, a size of the basic polygon may decrease. In other words, as the size of the basic polygon decreases, the amount of computation of the CPU and the amount of computation of the GPU may be larger. As the size of the base polygon decreases, the rendering quality may improve. The amount of computation of the CPU and the amount of computation of the GPU may correspond to rendering resource usage. As the number of vertices of the mesh model increases, the rendering quality may improve. As a display of a shadow becomes clearer, the rendering quality may improve. As a texture resolution becomes higher, the rendering quality may improve. If external lighting effects are applied, the rendering quality may improve. A frame buffer size becomes larger, the rendering quality may improve.

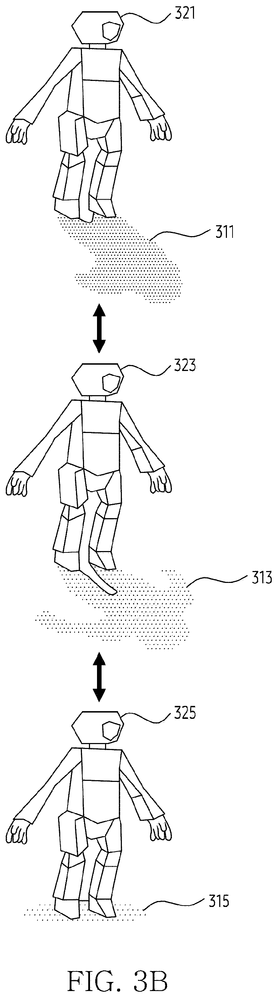

FIG. 3B illustrates an example of a display of a shadow, according to embodiments.

Referring to FIG. 3B, a shadow 311 may be displayed based on an object 321. The shadow 311 may be generated in a first method based on brightness of a surrounding environment less than specified brightness. A shadow 313 may be displayed to correspond to an object 323. The shadow 313 may be generated in a second method based on brightness of a surrounding environment to be at least the specified brightness. A shadow 315 may be displayed to correspond to an object 325. The shadow 315 may be generated in a third method regardless of brightness of light. At least one processor (e.g., the processor 120 of FIG. 1) may generate the shadow 311 or the shadow 313 according to brightness of a surrounding environment identified by a sensor of a remote display device. For example, when brightness of a surrounding environment measured by the sensor is at least the specified brightness, the at least one processor 120 may output a shadow that has not gone through a filter, such as the shadow 313. When brightness of a surrounding environment measured by the sensor is less than the specified brightness, the at least one processor 120 may output a shadow that has passed through a filter, such as the shadow 311. The at least one processor 120 may output the shadow 311 by passing information on the shadow 313 through a filter. The filter may remove an artifact from a periphery of the shadow and output a shadow having a smooth periphery. The amount of computation of the central processing unit (CPU) and the amount of computation of the graphic processing unit (GPU) for generating the shadow 311 may be greater than the amount of computation of the CPU and the GPU for generating the shadow 313. The shadow 315 may be generated without considering the brightness of the surrounding environment. The amount of computation of the CPU and the amount of computation of the GPU while outputting the shadow 315 may be lower than the amount of computation of the CPU and the amount of computation of the GPU while outputting the shadow 311. The amount of computation of the CPU and the amount of computation of the GPU when outputting the shadow 315 may be lower than the amount of computation of the CPU and the amount of computation of the GPU when outputting the shadow 313. In other words, the amount of computation when outputting may be low in an order of the shadow 311, the shadow 313, and the shadow 315. However, the rendering quality may improve, as the amount of computation increases. The amount of computation of the CPU and the amount of computation of the GPU may correspond to rendering resource usage.

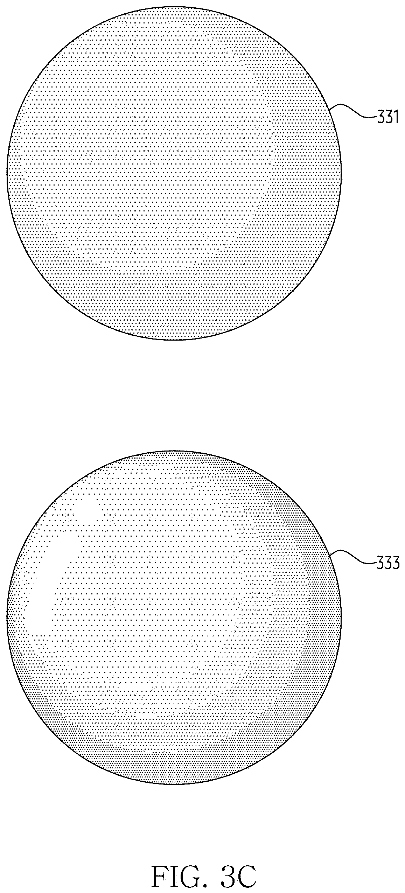

FIG. 3C illustrates an example of image processing for representing light reflection, according to embodiments.

Referring to FIG. 3C, an object 331 may be an image displaying an object having a roughness greater than or equal to a reference roughness. An object 333 may be an image displaying an object having a roughness less than the reference roughness. The roughness of the object 331 and the roughness of the object 333 may be represented by shading. The shading may be an image processing method for displaying a color change of a surface of an object. According to an embodiment, at least one processor (e.g., the processor 120 of FIG. 1) may express reflected light based on a characteristic of the object surface such as basic color, a material, and roughness of the object surface through a physically based shading (PBS) method. According to an embodiment, the at least one processor 120 may express skin of an avatar through a skin shading method when displaying a virtual image including the avatar. The at least one processor 120 may express a texture like human skin through the skin shading method. According to an embodiment, the at least one processor 120 may express light reflected from the surface of the object by identifying a color for each pixel through a phong shading method.

According to an embodiment, the amount of computation of the central processing unit (CPU) used and the amount of computation of the graphic processing unit (GPU) used may increase in an order of the pong shading method, the physically based shading (PBS) method, and the skin shading method. On the other hand, the rendering quality may be increased in an order of the phong shading method, the PBS method, and the skin shading method. The amount of computation of the CPU and the amount of computation of the GPU may correspond to the rendering resource usage. The rendering quality may be a degree to which the rendered image is implemented similar to an actual image. As the number of vertices of the mesh model increases, the rendering quality may improve. As a display of a shadow becomes clearer, the rendering quality may improve. As a texture resolution becomes higher, the rendering quality may improve. If external lighting effects are applied, the rendering quality may improve. A frame buffer size becomes larger, the rendering quality may improve.

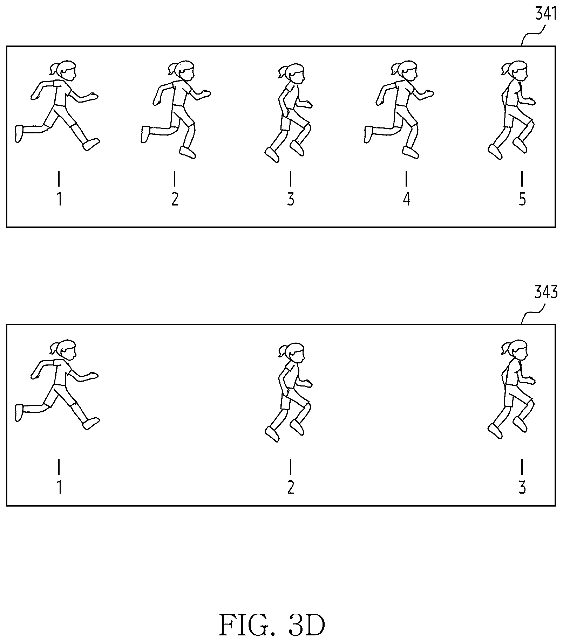

FIG. 3D illustrates an example of a frame rate, according to embodiments.

Referring to FIG. 3D, an animation 341 may be a video reproduced at a first frame rate. An animation 343 may be a video reproduced at a second frame rate lower than the first frame rate. For example, the first frame rate may be 60 frames per second. The second frame rate may be 30 frames per second. The frame rate means a speed at which an image is generated. The frame rate may be identified by the number of frames generated per second.

According to an embodiment, the remote display device (e.g., a head-mounted display (HMD) device or augmented (AR) glasses) may receive an external image according to a specified frame rate and generate a virtual image.

According to an embodiment, as the frame rate increases, the amount of computation of the used central processing unit (CPU) and the amount of computation of the used graphic processing unit (GPU) may increase. This is because the amount of data to be rendered and processed per unit time in a case that a frame rate is high, is larger than the amount of data to be rendered and processed per unit time in a case that the frame rate is low.

According to an embodiment, the at least one processor 120 may track a movement of an external object and generate an avatar that moves to correspond to the movement of the external object as a virtual image. If the virtual image includes an avatar, as the frame rate becomes higher, the more delicate a movement of the avatar may be reflected compared to the lower frame rate.

According to an embodiment, in a scenario context in which detail of a rendering image is more important than the implementation of an operation, the at least one processor 120 may decrease the amount of computation of the CPU and the amount of computation of the GPU used by lowering the frame rate, compared to a case where the frame rate is high. The amount of computation of the CPU and the amount of computation of the GPU may correspond to the rendering resource usage.

In FIGS. 3A, 3B, 3C, and 3D, elements that affect rendering quality are described, but the embodiments of the present disclosure are not limited thereto.

According to an embodiment, the texture resolution may be a factor affecting rendering quality. The virtual image may include a plurality of textures. As the resolution of the texture becomes higher, the rendering quality may improve. This is because as the resolution of the texture becomes higher, a pattern of the texture may be displayed more delicately. However, as the resolution of the texture becomes higher, the rendering resources usage required to render the texture may increase. The resolution of the texture may be kept constant while a rendering environment is constant. However, if the rendering environment, such as the gaze of the user and a rendering variable, changes over time, such as an avatar in an augmented reality (AR) image, the texture resolution may change according to the rendering environment for efficient use of the rendering resource.

According to an embodiment, a filtering method for removing an artifact generated by a texture mapping may be a factor affecting a rendering quality. The texture mapping may be a process of generating a pattern of an object surface based on an externally given value (e.g., a mapping source). The artifact generated by the texture mapping may be filtered through a nearest neighbor method, a linear method, a bilinear method, or a trilinear method. The rendering resource usage may vary according to the filtering method. The rendering quality may vary according to the filtering method.

According to an embodiment, external lighting effects may be a factor affecting the rendering quality. The external lighting effects may be, during rendering, an operation for expressing highlight and light and shade of an image based on a characteristic of external lighting. The at least one processor 120 may grasp the characteristic of the external lighting such as a direction and brightness of the lighting in an actual environment through a sensor. The at least one processor 120 may express highlight and light and shade, such as actual external lighting shining on the rendered object based on the characteristic of the external lighting. For example, when the sun is shining in a first direction, the at least one processor 120 may express the highlight and the light and shade, as if the object receives light from the sun in the first direction. When the external lighting effects are applied, a rendering quality of a rendering image may be improved. However, when the external lighting effects are applied, the rendering resources usage may increase.

According to an embodiment, a frame buffer size may be a factor affecting the rendering quality. In a high dynamic range (HDR), the at least one processor 120 may use 16-bits for each channel of red (R), green (G), and blue (B) of a RGB method. A color expression of an image displayed through the high dynamic range (HDR) may be wider than a color expression of an image displayed through a low dynamic range (LDR). A rendering resource usage while displaying the image through the low dynamic range (LDR) may be less than a rendering resource usage while displaying the image through the high dynamic range (HDR).

The at least one processor (e.g., the processor 120 of FIG. 1) may adjust a rendering quality and a frame rate according to an executed scenario context. The at least one processor 120 may identify an executed scenario context. The at least one processor 120 may set a weight according to an object and a weight according to a portion in the object based on the scenario context. The at least one processor 120 may perform a first rendering process for improving the rendering quality of the portion in the object having the weight greater than or equal to a reference value based on identifying that the scenario context is a first type. The first type may be a type in which the scenario context is a situation in which importance of detailed representation of the rendering image is higher than importance of improving the frame rate. A resource for displaying a virtual image is limited. Therefore, when the importance of the detailed representation is higher than the importance of improving the frame rate, the at least one processor 120 may lower the frame rate and perform the first image process for a rendering quality. The detailed representation may be adjusted by factors such as the number of vertices in the mesh model, a shadow type, a shading method, a texture resolution, external lighting effects, and a frame buffer size. The at least one processor 120 may perform a second rendering process for increasing the frame rate of the portion in the object having the weight greater than or equal to the reference value based on identifying that the scenario context is a second type. A resource for displaying a virtual image is limited. Therefore, when the importance of improving the frame rate is higher than the importance of detailed representation, the at least one processor 120 may lower the rendering quality and perform the second rendering process to increase the frame rate. As the frame rate becomes higher, a degree of correspondence between a movement of the tracked user and a movement of an avatar in the virtual image becomes higher. The second type may be a scenario context in which accuracy of a movement of the avatar in the virtual image should be higher than accuracy of a movement of the avatar of the first type.

The weight may be identified according to a portion included in an object (e.g., an avatar). For example, a weight may be identified according to a portion of an object corresponding to a portion such as ankles, knees, hip joints, and abdomen of a user. A rendering quality and a frame rate of a rendering image may be controlled according to the weight.

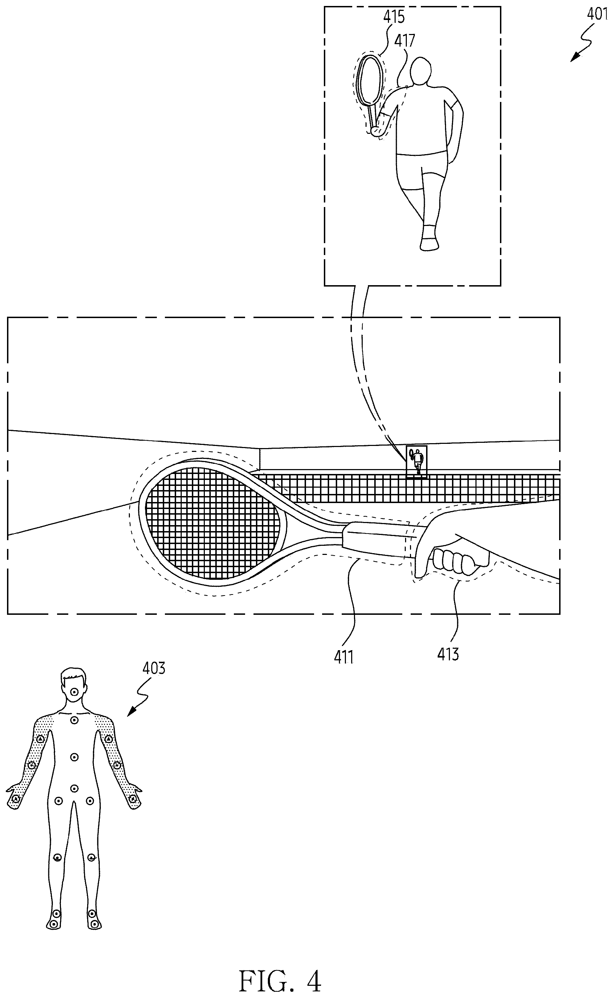

FIG. 4 illustrates an example of a scenario context for a sports match according to embodiments.

Referring to FIG. 4, a scenario context 401 may be a situation interacting with another object through a sports match. A weight map 403 may display points having a high weight in an avatar controlled by a user. An object 411 may be a tool object disposed outside an object corresponding to a body of an avatar. An object 413 may be an object corresponding to a hand of the avatar. An object 415 may be another tool object disposed outside another object corresponding to a body of another avatar. An object 417 may be an object corresponding to a hand of the other avatar. According to an embodiment, the avatar controlled by the user may correspond to a tracked body of the user. According to another embodiment, the avatar controlled by the user may be controlled through a controller.

According to an embodiment, at least one processor (e.g., the processor 120 of FIG. 1) may identify a weight for the tool object (e.g., the object 411) disposed outside the body of the avatar. The at least one processor 120 may perform a first rendering process or a second rendering process according to the weight equal to or greater than a reference value for the tool object.

According to an embodiment, the scenario context 401 may be a situation of playing a tennis match with another object. The scenario context 401 may be a second type. This is because importance of improving a frame rate is higher than importance of a detailed representation in a rendering image. As the frame rate becomes higher, a degree of correspondence between a movement of the user and a movement of the avatar in the virtual image may become higher. In the scenario context 401, improvement of details of a racket and an arm portion of an object (e.g., an avatar) may be of lower importance than improvement of a degree of correspondence between a movement of the object and a movement of an actual user. Therefore, in a scenario context interacting with the other object through a sports match, the scenario context may be identified as a first type.

According to an embodiment, in a scenario context of interacting with another object through a sports match, such as the scenario context 401, the at least one processor 120 may perform a second rendering process so as to increase the frame rate. The at least one processor 120 may lower a rendering quality of the portion in the object having the weight greater than or equal to the reference value through the second rendering process.

For example, the at least one processor 120 may set a frame rate to be at least a specified speed value in order to perform the second rendering process. This is because a degree of correspondence between a movement of the user and a movement of the object becomes higher, as the frame rate becomes faster. Since content on the frame rate is described in FIG. 3D, a redundant description will be omitted below. For example, the at least one processor 120 may display a movement of the object 413 based on a frame rate greater than or equal to at least a specified speed value.

For example, the at least one processor 120 may set the number of vertices of a mesh model corresponding to the portion to be less than a specified number for the portion in the object having the weight greater than or equal to the reference value in order to perform the second rendering process. As the number of vertices of the mesh model becomes fewer, the rendering quality becomes lower. This is because a rendering resource may become secured, as the rendering quality becomes lower. Since content of the mesh model is described in FIG. 3A, redundant description will be omitted below. For example, the number of vertices of the mesh model of the object 411 corresponding to the tennis racket, the object 413 corresponding to a hand of the avatar, the object 415 corresponding to the racket of an opponent object, the object 415 corresponding to the hand, and the object 417 corresponding to the hand of the other avatar may be less than a specified number.

For example, the at least one processor 120 may set a texture resolution to be less than a specified resolution value for the portion in the object having the weight greater than or equal to the reference value in order to perform the second rendering process. This is because the rendering quality becomes lower as the texture resolution becomes lower, so that rendering resource may be secured. For example, the at least one processor 120 may set the texture resolution of the object 411 corresponding to the tennis racket, the object 413 corresponding to the hand of the avatar, the object 415 corresponding to the racket of the opponent object, the object 415 corresponding to the hand, and the object 417 corresponding to the hand of the other avatar to be less than the specified resolution value.

For example, the at least one processor 120 may set the frame buffer size to 8-bits for the portion in the object having the weight greater than or equal to the reference value in order to perform the second rendering process. This is because the rendering quality becomes lower as the frame buffer size becomes lower, so that the rendering resource may be secured. For example, the at least one processor 120 may set the frame buffer size of the object 411 corresponding to the tennis racket, the object 413 corresponding to the hand of the avatar, the object 415 corresponding to the racket of the opponent object, the object 415 corresponding to the hand, and the object 417 corresponding to the hand of the other avatar to 8-bits.

For example, the at least one processor 120 may perform image processing to express light reflection according to a surface material in order to perform the second rendering process. The light reflection according to the surface material may be expressed based on a phong shading method. The rendering resource used by the phong shading method may be smaller than the rendering resource used by a skin shading method. Since content of the phong shading method is described in FIG. 3C, redundant description will be omitted below. For example, the at least one processor 120 may represent texture for the object 411 corresponding to the tennis racket, the object 413 corresponding to the hand of the avatar, the object 415 corresponding to the racket of the opponent object, the object 415 corresponding to the hand, and the object 417 corresponding to the hand of the other avatar through the phong shading method.

For example, the at least one processor 120 may simplify a display of a shadow for the portion in the object having the weight greater than or equal to the reference value in order to perform the second rendering process. This is because the rendering quality becomes lower as the display of the shadow is simplified, so that rendering resource may be secured. For example, the at least one processor 120 may display a shadow in a second method (e.g., the second method of FIG. 3B) without passing through a filter. For another example, the at least one processor 120 may display a shadow in a third method (e.g., the second method of FIG. 3B) that generates the shadow regardless of intensity of light in a surrounding environment. For example, the at least one processor 120 may simplify and represent the shadow corresponding to the object 411 corresponding to the tennis racket, the object 413 corresponding to the hand of the avatar, the object 415 corresponding to the racket of the opponent object, the object 415 corresponding to the hand, and the object 417 corresponding to the hand of the other avatar in the third method.

According to an embodiment, the weight map 403 may display a weight according to a portion in the object according to the scenario context 401. In a situation of interacting with another object through a sports match such as the scenario context 401, the at least one processor 120 may set a weight corresponding to the object 411, the object 413, the object 415, and the object 417 high. This is because the weight should be set high to improve accuracy of interaction through a ball. In the scenario context of interacting with another object through a sports match, the scenario may proceed only when the accuracy of the interaction is secured.

According to an embodiment, the at least one processor 120 may identify a weight for the portion in the object corresponding to the identified scenario context by referring to a mapping table. For example, when a scenario context for a sports match using arms (e.g., tennis) is identified, a weight for the hand and the tennis racket may be written highly on the mapping table. For another example, when a scenario context for a sports match using legs (e.g., soccer) is identified, a weight for the legs and the ball may be written highly in the mapping table.

According to an embodiment, the weight may be identified by counting the number of movements of at least a specified size according to a portion in an object. In other words, when the object interacts with another object in the scenario context, a weight of a portion in the object having a high frequency of a movement may be higher than a weight of another portion in the object having a low frequency of the movement. In addition, according to an embodiment, the weight may be identified by counting the number of times a gaze of the user stays for at least a specified time according to a portion in the object. Information on the gaze of the user may be obtained by tracking a direction of a pupil of the user. In other words, when the object interacts with the other object in the scenario context, a weight of a portion in the object having a high frequency viewed by the user may be higher than a weight of another portion in the object having a low frequency viewed by the user.

According to an embodiment, a sum of weights of portions in the object may be a constant value. For example, in the weight map 403, a sum of weights of portions corresponding to both legs, weights of portions corresponding to both arms, a weight of a portion corresponding to a head, a weight of a portion corresponding to a torso, and a weight of a portion corresponding to the tool object may be constant. The at least one processor 120 may determine a sum of weights of portions in the object as a constant value in order to identify a relative weight for portions in the object.

According to an embodiment, a weight for a first portion in the object may be identified based on a weight for a second portion in an object connected to the first portion. This is to prevent a rendering quality for a portion in the object from having a discontinuous value for a rendering quality of another portion in the object. The discontinuous rendering quality means that difference between a rendering element (e.g., the number of vertices of a mesh model, and a texture resolution) value for a portion in the object and a rendering element value for another portion in the object is greater than or equal to a reference difference value. For a rendering image having the discontinuous rendering quality, the user may perceive the rendering image as unnatural.

According to an embodiment, the weight for a portion in an object in a first frame may be identified based on a weight for a portion in an object in a second frame, which is a previous frame of the first frame. This is to prevent a rendering quality from being rapidly adjusted. The rendering quality adjustment may be gradually performed according to a specified time. This is because the rendering quality adjustment needs to be gradually performed, so that the user may not perceive unnaturalness with respect to the rendering image.

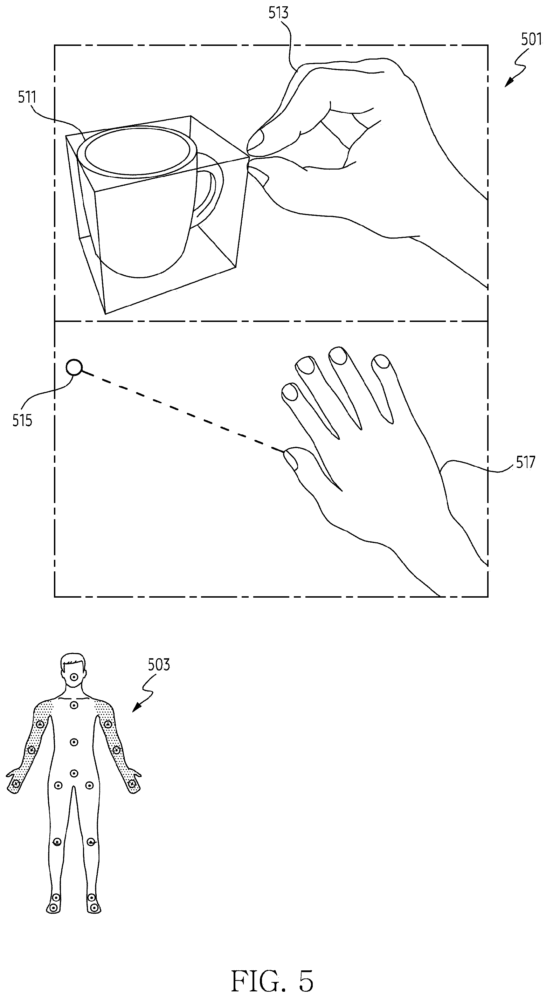

FIG. 5 illustrates an example of a scenario context interacting with another object according to embodiments.

Referring to FIG. 5, a scenario context 501 may be a situation interacting with another object. A weight map 503 may display points having a high weight in an avatar controlled by a user. A target object 511 may be disposed outside an object corresponding to a body of the avatar. An object 513 may correspond to a hand of the avatar. A target point 515 may be a point indicated by an object corresponding to the body of the avatar. The object 517 may be an object corresponding to the hand of the avatar. According to an embodiment, the avatar controlled by the user may correspond to a body of the user tracked. According to another embodiment, the avatar controlled by the user may be controlled through a controller.

According to an embodiment, at least one processor (e.g., the processor 120 of FIG. 1) may identify a weight for a target object (e.g., the object 511) disposed outside the body of the avatar. The at least one processor 120 may perform a first rendering process or a second rendering process according to the weight greater than or equal to a reference value for the target object.

According to an embodiment, the scenario context 501 may be a situation of interacting with another object. For example, the scenario context 501 may be a situation of handling a target object (e.g., the target object 511). For another example, the scenario context 501 may be a situation pointing a specific point (e.g., the target point 515). The scenario context 501 may be a first type. This is because importance of detailed representation is higher than importance of improving a frame rate in a rendering image. In the scenario context 501, improvement of details of the target object 511, the object 513, the target point 515, and the object 517 may be of higher importance than improvement of a degree of correspondence between a movement of the object and a movement of an actual user. Therefore, in a scenario context that interacts with another object, the scenario context may be identified as the first type.

According to an embodiment, in a scenario context handling or pointing another object, such as the scenario context 501, the at least one processor 120 may perform the first rendering process to improve a rendering quality. The at least one processor 120 may improve a rendering quality of the portion in the object having the weight greater than or equal to the reference value through the first rendering process.

For example, the at least one processor 120 may set the frame rate to be less than a specified speed value in order to perform the first rendering process. This is because the rendering resource used becomes fewer as the frame rate becomes slower. The at least one processor 120 may use the rendering resource secured by decreasing the frame rate to improve the rendering quality of the rendering image. Since content of the frame rate is described in FIG. 3D, a redundant description will be omitted below. For example, the at least one processor 120 may display a movement of the target object 511 and the object 513 based on a frame rate less than a specified speed value.

For example, the at least one processor 120 may set the number of vertices of a mesh model corresponding to the portion greater than or equal to a reference value, for the portion in the object having the weight greater than or equal to the reference value, in order to perform the first rendering process. As the number of vertices of the mesh model increases, the rendering quality may improve. The at least one processor 120 may improve a user experience by displaying the portion having the high weight in detail. This is because the portion having the high weight is a portion that the user pays attention to. Since content of the mesh model is described in FIG. 3A, a redundant description will be omitted below. For example, the number of vertices of the mesh model of the target object 511 corresponding to the coffee cup, the object 513 corresponding to the hand of the avatar, the target point 515 pointed by the hand of the avatar, and the object 517 corresponding to the hand of the avatar may be at least a specified number.

For example, the at least one processor 120 may set a texture resolution to be at least a specified resolution value for the portion in the object having the weight greater than or equal to the reference value in order to perform the first rendering process. The at least one processor 120 may improve a user experience by displaying the portion having the high weight in detail. This is because the portion having the high weight is a portion that the user pays attention to. For example, the at least one processor 120 may set the texture resolution of the target object 511 corresponding to the coffee cup, the object 513 corresponding to the hand of the avatar, the target point 515 pointed by the hand of the avatar, and the object 517 corresponding to the hand of the avatar to be at least a specified resolution value.

For example, the at least one processor 120 may set the frame buffer size to 16-bits for the portion in the object having a weight greater than or equal to the reference value in order to perform the first rendering process. This is because the rendering quality may improve, as the frame buffer size becomes higher. The at least one processor 120 may improve a user experience by displaying the portion having the high weight in detail. For example, the frame buffer size of the target object 511 corresponding to the coffee cup, the object 513 corresponding to the hand of the avatar, the target point 515 pointed by the hand of the avatar, and the object 517 corresponding to the hand of the avatar may be set to 16-bits.

For example, the at least one processor 120 may perform image processing to express light reflection and skin according to a surface material in order to perform the first rendering process. The light reflection according to the surface material may be represented based on a physically based shading (PBS) method. The skin may be represented based on a skin shading method. A rendering resource used by the physically based shading (PBS) method may be greater than a rendering resource used by a phong shading method. A rendering resource used by the skin shading method may be greater than the rendering resource used by the phong shading method. Since the PBS method and the skin shading method are described in FIG. 3C, a redundant description will be omitted below. The at least one processor 120 may improve a user experience by displaying the portion having the high weight in detail. For example, the at least one processor 120 may indicate a texture with respect to the target object 511 corresponding to the coffee cup, the object 513 corresponding to the hand of the avatar, the target point 515 pointed by the hand of the avatar, and the object 517 corresponding to the hand of the avatar, through the PBS method or the skin shading method.

For example, the at least one processor 120 may specify a display of a shadow for the portion in the object having the weight greater than or equal to the reference value in order to perform the first rendering process. This is because the user experience improves as the display of the shadow becomes more detailed. For example, the at least one processor 120 may display a shadow in a first method (e.g., the first method of FIG. 3B) according to brightness of a surrounding environment less than specified brightness. For another example, the at least one processor 120 may display a shadow in a second method (e.g., the second method of FIG. 3B) according to the brightness of the surrounding environment of at least specified brightness. For example, a shadow corresponding to the target object 511 corresponding to the coffee cup, the object 513 corresponding to the hand of the avatar, the target point 515 pointed by the hand of the avatar, and the object 517 corresponding to the hand of the avatar may be specified and indicated in the first method or the second method.

According to an embodiment, the weight map 503 may display a weight according to a portion in the object according to the scenario context 501. In a scenario context handling or pointing another object, such as the scenario context 501, the at least one processor 120 may set a weight corresponding to the target object 511, the object 513, the target point 515, and the object 517 high.

According to an embodiment, the at least one processor 120 may identify a weight for the portion in the object corresponding to the identified scenario context by referring to a mapping table. For example, when a scenario context in which a target object (e.g., a cup) is handled through an object corresponding to a hand is identified, a weight for the target object and the hand may be written highly in the mapping table. For another example, when a scenario context for performing an artistic activity (e.g., drawing) using a brush is identified, a weight for a brush and a hand may be written highly in the mapping table.

According to an embodiment, the weights may be identified by counting the number of movements of at least a specified size according to a portion in the object. According to another embodiment, the weight may be identified by counting the number of times that a gaze of the user stays for at least a specified time according to a portion in the object. Since content of the weight identification method is described in FIG. 4, a redundant description will be omitted below.

According to an embodiment, a sum of weights of portions in the object may be a constant value. The at least one processor 120 may determine a sum of the weights of the portions in the object as the constant value in order to identify a relative weight for portions in the object.

According to an embodiment, a weight for a first portion in the object may be identified based on a weight for a second portion in an object connected to the first portion. This is to prevent a rendering quality for a portion in an object from having a discontinuous value for a rendering quality of another portion in the object. The discontinuous rendering quality means that difference between a rendering element (e.g., the number of vertices of a mesh model, and a texture resolution) value for a portion in the object and a rendering element value for another portion in the object is greater than or equal to a reference difference value. For a rendering image having the discontinuous rendering quality, the user may perceive the rendering image as unnatural.

According to an embodiment, the weight for a portion in an object in a first frame may be identified based on a weight for a portion in an object in a second frame, which is a previous frame of the first frame. This is to prevent a rendering quality from being rapidly adjusted. The rendering quality adjustment may be gradually performed according to a specified time. This is because the rendering quality adjustment needs to be gradually performed both temporally and spatially, so that the user may not perceive unnaturalness with respect to the rendering image.

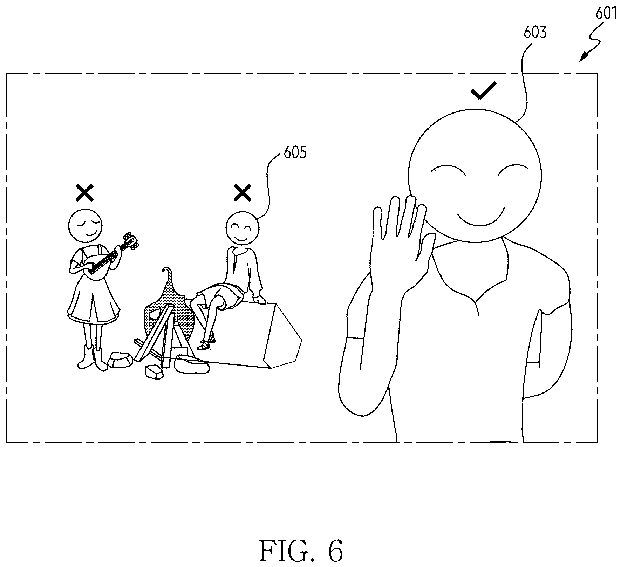

FIG. 6 illustrates an example of a scenario context for communication with another avatar according to embodiments.

Referring to FIG. 6, a scenario context 601 may be a situation in which an avatar of a user is communicating with another avatar. Another avatar 603 may communicate with an object corresponding to the avatar of the user. Other avatars 605 may not communicate with the avatar of the user. For example, the other avatar 603 may be communicating with the avatar of the user through a visual method. The other avatar 603 may be communicating with the avatar of the user through a chat window. The other avatar 603 may be communicating with the avatar of the user through a voice message.

According to an embodiment, in the scenario context 601, when an object corresponding to the user interacts with another object (e.g., the other avatar 603), a weight of the other object (e.g., the other avatar 603) that is a target of the interaction may be higher than a weight of another object (e.g., other avatars 605) that is not the target of the interaction. The scenario context 601 may include a situation in which a meeting is conducted in an augmented reality (AR) environment or a virtual reality (VR) environment.

According to an embodiment, the scenario context 601 may be a situation of communicating with another avatar. The scenario context 601 may be a first type if the avatar does not communicate through a movement. This is because the importance of detailed representation is higher than the importance of improving a frame rate in order to improve a user experience in the rendering image. In the scenario context 601, improvement of details of the other avatar 603 may be of higher importance than improvement in a degree of correspondence between a movement of the object and a movement of an actual user. Therefore, in the scenario context 601 of communicating with another avatar, if communication is not performed through a movement, the scenario context may be identified as the first type. The communication through the movement may include communication by a gesture or sign language.

According to an embodiment, in a situation communicating with another avatar, such as the scenario context 601, the at least one processor 120 may perform a first rendering process to improve the rendering quality. The at least one processor 120 may improve the rendering quality of the portion in the object having the weight greater than or equal to the reference value through the first rendering process. For example, the at least one processor 120 may set the frame rate to be less than a specified speed value in order to perform the first rendering process. This is because the rendering resource used becomes fewer, as the frame rate becomes slower. For example, the at least one processor 120 may set the number of vertices of a mesh model corresponding to the portion greater than or equal to a reference number, for the portion in the object having the weight greater than or equal to the reference value, in order to perform the first rendering process. As the number of vertices of the mesh model increases, the rendering quality may improve. For example, the at least one processor 120 may set a texture resolution to be at least a specified resolution value for the portion in the object having the weight greater than or equal to the reference value in order to perform the first rendering process. The at least one processor 120 may improve the user experience by displaying a portion having the high weight in detail. For example, the at least one processor 120 may set the frame buffer size to 16-bits for the portion in the object having the weight greater than or equal to the reference value in order to perform the first rendering process. This is because the rendering quality may improve, as the frame buffer size becomes higher. For example, the at least one processor 120 may perform image processing to express light reflection and skin according to a surface material in order to perform the first rendering process. The light reflection according to the surface material may be represented based on a physically based shading (PBS) method. The skin may be represented based on a skin shading method. For example, the at least one processor 120 may specify a display of a shadow for the portion in the object having the weight greater than or equal to the reference value in order to perform the first rendering process. This is because the user experience improves as the display of the shadow becomes more detailed. Content for the first rendering process is referenced in FIG. 5.

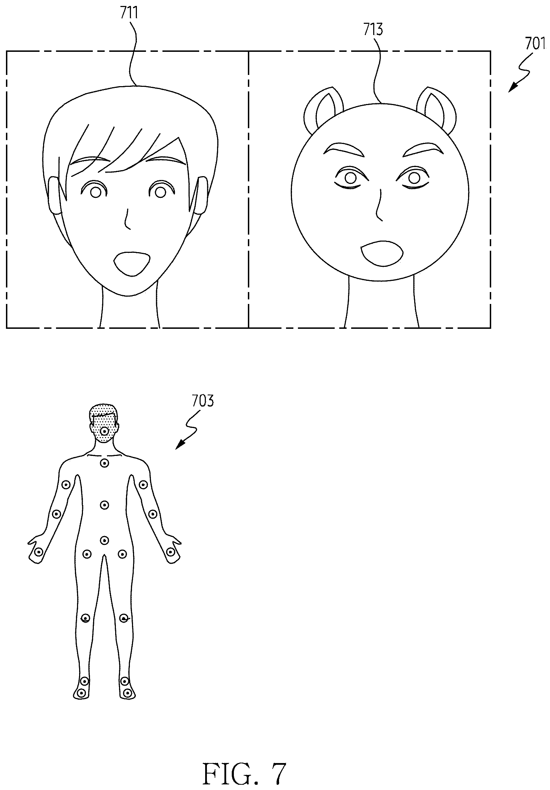

FIG. 7 illustrates an example of a scenario context for communication conducted through a voice, according to embodiments.

Referring to FIG. 7, a scenario context 701 may be a situation in which communication is being conducted through a voice. At least one processor (e.g., the processor 120 of FIG. 1) may generate an expression of a face 713 of an avatar according to an expression of a face 711 of a user. A weight map 703 may display points having a high weight in the avatar controlled by the user. According to the weight map 703, a weight of a point corresponding to the face may be high. In the scenario context 701 of communicating through a voice, importance of facial expression tracking is high. Therefore, the at least one processor 120 may increase visibility of a mouth shape included in the face 713 of the avatar by increasing a rendering quality of a face area. The at least one processor 120 may increase immersion of communication by increasing the visibility of the mouth shape in the scenario context 701. According to an embodiment, the avatar controlled by the user may correspond to a tracked body of the user. According to another embodiment, the avatar controlled by the user may be controlled through a controller.

According to an embodiment, in the scenario context 701, when communicating with another object through the voice, a weight of a portion corresponding to the face of the avatar of the user may be set higher than a weight of a portion corresponding to another portion of the avatar of the user. The scenario context 701 may include a situation in which a speech is conducted in an augmented reality (AR) environment or a virtual reality (VR) environment.

According to an embodiment, the scenario context 701 may be a situation of communicating with another avatar through a voice. The scenario context 701 may be a first type. This is because importance of detailed representation is higher than importance of improving a frame rate in order to improve a user experience in the rendering image.

According to an embodiment, in a situation of communicating through a voice, such as the scenario context 701, the at least one processor 120 may perform a first rendering process to improve the rendering quality. The at least one processor 120 may improve the rendering quality of the portion in the object having the weight greater than or equal to the reference value through the first rendering process. For example, the at least one processor 120 may set the frame rate to be less than a specified speed value in order to perform the first rendering process. This is because the rendering resource used becomes fewer as the frame rate becomes slower. For example, the at least one processor 120 may, in order to perform the first rendering process, set the number of vertices of a mesh model corresponding to the portion, for the portion in the object having the weight greater than or equal to the reference value, to be at least a specified number. This is because the greater the number of vertices of the mesh model, the higher the rendering quality may be. For example, the at least one processor 120 may set a texture resolution to be at least a specified resolution value for the portion in the object having the weight greater than or equal to the reference value in order to perform the first rendering process. This is because the at least one processor 120 may improve the user experience by displaying a portion having the high weight in detail. For example, the at least one processor 120 may set the frame buffer size to 16-bits for the portion in the object having the weight greater than or equal to the reference value in order to perform the first rendering process. This is because the rendering quality may improve, as the frame buffer size becomes higher. For example, the at least one processor 120 may perform image processing to express light reflection and skin according to a surface material in order to perform the first rendering process. The light reflection according to the surface material may be represented based on a physically based shading (PBS) method. The skin may be represented based on a skin shading method. For example, the at least one processor 120 may specify a display of a shadow for the portion in the object having the weight greater than or equal to the reference value in order to perform the first rendering process. This is because the user experience improves as the display of the shadow becomes more detailed. Content for the first rendering process is referenced in FIG. 5.

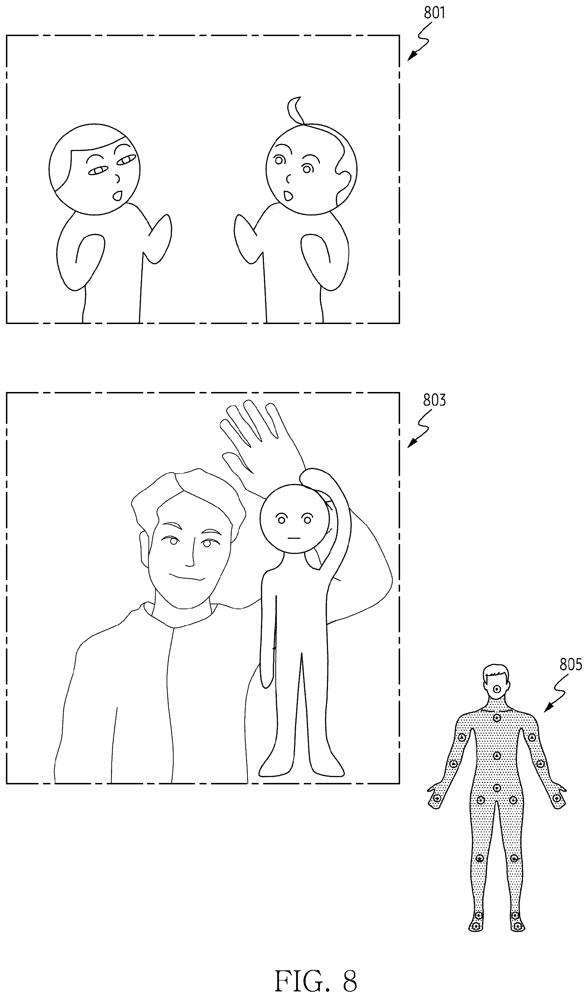

FIG. 8 illustrates an example of a scenario context for communication conducted through a gesture of an avatar according to embodiments.

Referring to FIG. 8, a scenario context 801 may be a situation in which communication is conducted through gestures with another avatar. A scenario context 803 may be a situation in which a movement of an avatar is controlled through motion tracking of a user. A weight map 805 may display points having a high weight among tracking points corresponding to a body of the user. According to the weight map 805, a weight of a point corresponding to an arm, a leg, and a torso may be high.

According to an embodiment, when communicating with the other avatar, the user may use a gesture as well as a voice. In the scenario context 801 of communicating through the gesture, importance of gesture tracking may be high. Therefore, the at least one processor 120 may increase accuracy of tracking by improving a frame rate. In the scenario context 803 that controls the movement of the avatar through the gesture tracking, importance of the gesture tracking may be high. Therefore, the at least one processor 120 may increase the accuracy of the tracking by improving the frame rate.

In the scenario context 801 and the scenario context 803, improvement of detail of an object corresponding to a body of the avatar may be of lower importance than improvement of correspondence between a movement of the object and a movement of an actual user. Therefore, the scenario context 801 of communicating through the gesture or the scenario context 803 controlling the movement of the avatar through the gesture tracking may be identified as the first type.

According to an embodiment, if a scenario context of communicating through a gesture, such as the scenario context 801, is identified, the at least one processor 120 may perform a second rendering process to increase the frame rate. If a scenario context controlling the movement of the avatar is identified through gesture tracking, such as the scenario context 803, the at least one processor 120 may perform the second rendering process for increasing the frame rate.

For example, the at least one processor 120 may set the frame rate to be at least a specified speed value in order to perform the second rendering process. This is because the degree of correspondence between the user's movement tracked and the movement of the object becomes higher, as the frame rate becomes faster.

For example, the at least one processor 120 may set the number of vertices of a mesh model corresponding to the portion to be less than a specified number for the portion in the object having the weight greater than or equal to the reference value in order to perform the second rendering process. This is because the number of vertices of the mesh model becomes fewer, a rendering quality becomes lower.

For example, the at least one processor 120 may set a texture resolution to be less than a specified resolution value for the portion in the object having the weight greater than or equal to the reference value in order to perform the second rendering process. This is because the rendering quality becomes lower as the texture resolution becomes lower, so that rendering resource may be secured.

For example, the at least one processor 120 may set the frame buffer size to 8-bits for the portion in the object having the weight greater than or equal to the reference value in order to perform the second rendering process. This is because the rendering quality becomes lower as the frame buffer size becomes lower, so that the rendering resource may be secured.

For example, the at least one processor 120 may perform image processing to express light reflection according to a surface material in order to perform the second rendering process. The light reflection according to the surface material may be expressed based on a phong shading method.

For example, the at least one processor 120 may simplify a display of a shadow for the portion in the object having the weight greater than or equal to the reference value in order to perform the second rendering process. This is because the rendering quality becomes lower as the display of the shadow is simplified, so that rendering resource may be secured.

Content for the second rendering process is referenced in FIG. 4.

According to an embodiment, the at least one processor 120 may identify a weight for the portion in the object corresponding to the identified scenario context by referring to a mapping table. For example, when a scenario context in which a conversation is made by a gesture is identified, a weight for limbs and a torso may be written highly in the mapping table.

According to an embodiment, the weight may be identified by counting the number of movements of at least a specified size according to a portion in the object. According to another embodiment, the weight may be identified by counting the number of times that a gaze of the user stays for at least a specified time according to a portion in the object. According to an embodiment, a sum of weights of portions in the object may be a constant value.

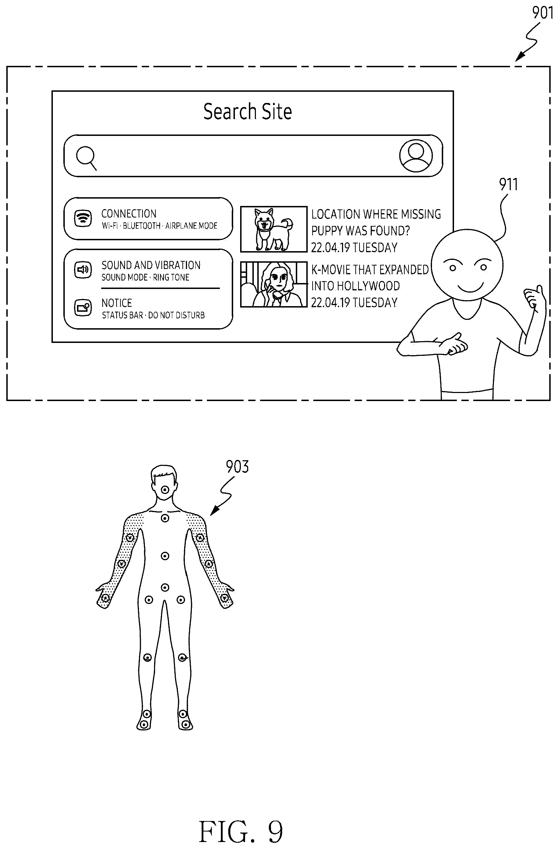

FIG. 9 illustrates an example of a scenario context for communication conducted through sign language, according to embodiments.

Referring to FIG. 9, a scenario context 901 may be a communication situation conducted through the sign language. An avatar 911 may communicate through the sign language based on hand motion tracking of a user. The avatar 911 may transmit contents included in content to the user in the sign language. A weight map 903 may display points having a high weight among tracking points corresponding to a body of the user. According to the weight map 805, a weight of a point corresponding to a hand may be high.

According to an embodiment, when communicating with another avatar, the user may use the sign language as well as a voice. The sign language may be a method for a hearing-impaired person to communicate. The at least one processor 120 may represent a hand motion and a hand shape for communication through the sign language. In the scenario context 901 in which communication is performed through the sign language, the importance of the hand motion tracking may be high. Therefore, the at least one processor 120 may increase accuracy of tracking by improving a frame rate. In addition, a rendering quality element unnecessary for hand motion tracking and hand shape tracking may be decreased.

According to an embodiment, in the scenario context 901, improvement of details of an object corresponding to a body of the avatar may be of lower importance than improvement in a degree of correspondence between a movement of the object and a movement of an actual user. Therefore, the scenario context 901 of communicating through a hand motion may be identified as a first type.

According to an embodiment, if a scenario context of communicating through sign language, such as the scenario context 901, is identified, the at least one processor 120 may perform a second rendering process to increase the frame rate. If a scenario context controlling a movement of the avatar is identified through hand motion tracking, as in the scenario context 901, the at least one processor 120 may perform the second rendering process to increase the frame rate.

For example, the at least one processor 120 may set the frame rate to be greater than or equal to a specified speed value in order to perform the second rendering process. This is because the degree of correspondence between the user's movement tracked and the movement of the object becomes higher, as the frame rate becomes faster.

For example, the at least one processor 120 may set the number of vertices of a mesh model corresponding to the portion to be less than a specified number for the portion in the object having the weight greater than or equal to the reference value in order to perform the second rendering process. This is because the rendering quality becomes lower, as the number of vertices of the mesh model becomes fewer.

For example, the at least one processor 120 may set a texture resolution to be less than a specified resolution value for the portion corresponding to the hand in order to perform the second rendering process. This is because the rendering quality becomes lower as the texture resolution becomes lower, so that a rendering resource may be secured.

For example, the at least one processor 120 may set the frame buffer size to 8-bits for the portion corresponding to the hand in order to perform the second rendering process. This is because the rendering quality becomes lower, as the frame buffer size becomes lower, so that the rendering resource may be secured.

For example, the at least one processor 120 may perform image processing to express light reflection according to a surface material in order to perform the second rendering process. The light reflection according to the surface material may be expressed based on a phong shading method.

For example, the at least one processor 120 may simplify a display of a shadow for the portion corresponding to the hand in order to perform the second rendering process. This is because the rendering quality becomes lower as the display of the shadow is simplified, so that the rendering resource may be secured.

Content for the second rendering process is referenced in FIG. 4.

According to an embodiment, the at least one processor 120 may identify a weight for the portion in the object corresponding to the identified scenario context by referring to a mapping table. For example, when a scenario context in which a conversation is made by a gesture is identified, a weight for limbs and a torso may be written highly in the mapping table.

According to an embodiment, the weight may be identified by counting the number of movements of at least a specified size according to a portion in the object. According to another embodiment, the weight may be identified by counting the number of times that a gaze of the user stays for at least a specified time according to a portion in the object. According to an embodiment, a sum of weights of portions in the object may be a constant value.

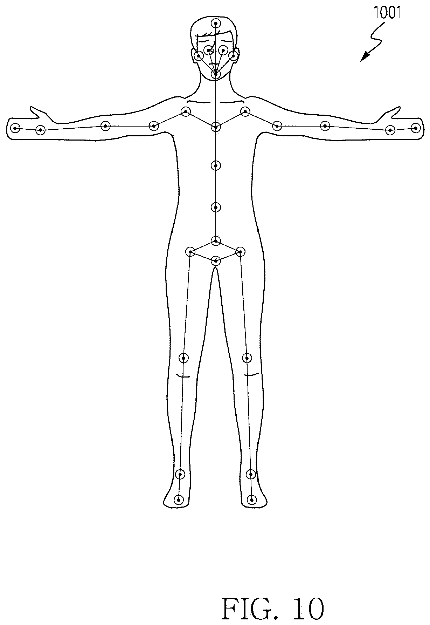

FIG. 10 illustrates an example of a joint structure of an avatar for identifying a weight, according to embodiments.

Referring to FIG. 10, a structure 1001 illustrates a hierarchical structure of an avatar. The structure 1001 may be a tree structure starting from the torso and descending toward arms, legs, and a head. The weight may be identified according to a portion included in an object (e.g., an avatar). For example, a weight may be identified according to a portion of an object corresponding to a portion of ankles, knees, hip joints, and abdomen of a user. A rendering quality and a frame rate of a rendering image may be controlled according to the weight.

According to an embodiment, when a specific point moves, a structure of an upper hierarchy may be affected. The structure of the upper hierarchy may be a portion connecting a torso of the avatar to a specific point. For example, when a left wrist moves, a left elbow and a left shoulder, which are a structure of the upper hierarchy of the left wrist, may be affected. However, a portion that is not the structure of the upper hierarchy of the left wrist, such as a portion of an elbow of a right wrist or a portion of a leg, is not affected.

According to an embodiment, an attention level may be identified in consideration of the structure of the upper hierarchy being affected by a movement of a specific point. A weight for a specific point in the object may be identified based on a weight for an upper hierarchical structure in the object connected to the specific point. This is to prevent a rendering quality for a portion of the object from having a discontinuous value for a rendering quality of another portion of the object. The discontinuous rendering quality means that difference between a rendering element (e.g., the number of vertices of a mesh model, and a texture resolution) value for a portion in the object and a rendering element value for another portion in the object is greater than or equal to a reference difference value. For a rendering image having the discontinuous rendering quality, the user may perceive the rendering image as unnatural. The weight of the specific point may be identified as in Equation 1.

【 Equation 1 】

$$A_{current\ body}^{t} = \sum_{l=linked\ body}^{L} \alpha(A_{current\ body}^{t} - A_{linked\ body}^{t}) + A_{current\ body}^{t-1}$$

$A^t_{current\ body}$ may be a weight of a specified point (e.g., current body) in a t-th frame. $A^t_{linked\ body}$ may be a weight of a linked body to the current body in the t-th frame. *a* may be a damping coefficient.

According to an embodiment, the weight for a portion in an object in a first frame may be identified based on a weight for a portion in an object in a second frame, which is a previous frame of the first frame. This is to prevent a rendering quality from being rapidly adjusted. The rendering quality adjustment may be gradually performed according to a specified time. This is because the rendering quality adjustment needs to be gradually performed so that the user may not perceive unnaturalness with respect to the rendering image. The following Equation 2 may be an algorithm for identifying a weight in consideration of an interval from a current time to a fixed previous n-th frame in order to prevent an abrupt change in the rendering quality over time. A weight of the t-th frame may be obtained by applying a decay value to weights up to the t-1th frame, the t-2th frame, ..., and the t-nth frame, and adding up the decay value. In the t-th frame, the weight of the specific point may be identified as in Equation 2.

【Equation 2】

$$A^t_f = \sum_{i=0}^{n} \frac{\beta^i A^{t-i}_{current\ body}}{n}$$

$A^t_f$ may be an updated weight of a specified point (e.g., current body) in a t-th frame. $A^t_{current\ body}$ may be an updated weight of a linked body to the current body in the t-th frame. $\beta^i$ may be a decay coefficient at the t-th frame. *n* may be a time interval considered.

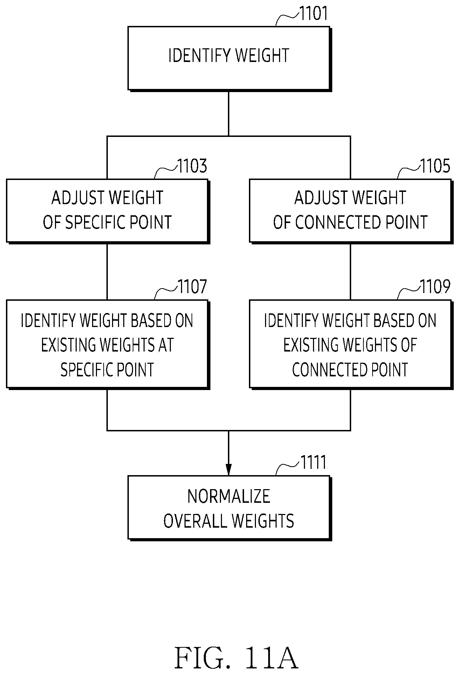

FIG. 11A illustrates a flow of an operation of an electronic device (e.g., an electronic device 101) for identifying a weight, according to embodiments. Operations of the electronic device may be performed by at least one processor (e.g., a processor 120).

Referring to FIG. 11A, in an operation 1101, the at least one processor 120 may identify a weight. According to an embodiment, when instructions are executed, an object corresponding to a user in an image frame provided by an application executed may be recognized. When the instructions are executed, the at least one processor 120 may identify a scenario context of the executed application. According to an embodiment, the at least one processor 120 may identify a changed weight for the portion in the object corresponding to the identified scenario context with reference to a mapping table. For example, when a scenario context for a sports match using an arm (e.g., tennis) is identified, a weight for a hand and a tennis racket may be written highly in the mapping table. For example, when a scenario context in which a target object (e.g., a cup) is handled through an object corresponding to a hand is identified, the weight for the target object and the hand may be written highly in the mapping table.

In an operation 1103, a weight of a specific point may be adjusted. The at least one processor 120 may adjust the weight to the identified weight value. For example, while a user handles another object (e.g., a cup), the weight for the other object and a hand of the avatar may be set high.

In an operation 1105, a weight of a point connected to the specific point may be adjusted. The at least one processor 120 may also adjust the weight of the point connected to the specific point. This is to prevent a rendering quality for a portion in an object from having a discontinuous value with respect to a rendering quality for another portion in the object. The discontinuous rendering quality means that difference between a rendering element (e.g., the number of vertices of a mesh model, and a texture resolution) value for a portion in the object and a rendering element value for another portion in the object is greater than or equal to a reference difference value. For example, while the user handles the other object (e.g., a cup) through the hand, a weight of elbow areas and shoulder areas connected to the hand may also be adjusted to be high. This is to prevent a rendering quality for the hand of the avatar from having a discontinuous value with respect to a rendering quality for an elbow of the avatar.

In an operation 1107, the at least one processor 120 may identify a weight based on existing weights at a specific point. According to an embodiment, the weight for a portion in an object in a first frame may be identified based on a weight for a portion in an object in a second frame, which is a previous frame of the first frame. This is to prevent a rendering quality from being rapidly adjusted. The rendering quality adjustment may be gradually performed according to a specified time. This is because the rendering quality adjustment needs to be gradually performed so that the user may not perceive unnaturalness with respect to the rendering image.

In an operation 1109, the at least one processor 120 may identify a weight of a connected point based on existing weights of the point connected to the specific point.

According to an embodiment, the weight for a connected point in the first frame may be identified based on a weight for a connected point in the second frame, which is the previous frame of the first frame. This is to prevent a rendering quality from being rapidly adjusted even at the connected point. The rendering quality adjustment may be gradually performed according to a specified time. This is because the rendering quality adjustment needs to be gradually performed so that the user may not perceive unnaturalness with respect to the rendering image.

In an operation 1111, the at least one processor 120 may normalize the overall weights. According to an embodiment, the at least one processor 120 may adjust weights so that a sum of weights of portions in the object becomes a constant value. For example, the at least one processor 120 may adjust weights so that a sum of weights of portions corresponding to both legs, weights corresponding to both arms, a weight of a portion corresponding to a head, a weight of a portion corresponding to a torso, and a weight for a portion corresponding to a tool object becomes a constant value. The at least one processor 120 may normalize the weights to compare the weights for portions in the object in a relative ratio. When the operation for normalization is not performed, overall rendering resource usage may continuously increase, causing an overload of the processor. After the operation for the normalization is performed, the weight may be adjusted by an additional scenario context. The at least one processor 120 may adjust overall weights by reflecting a scaling factor for the additional scenario context.

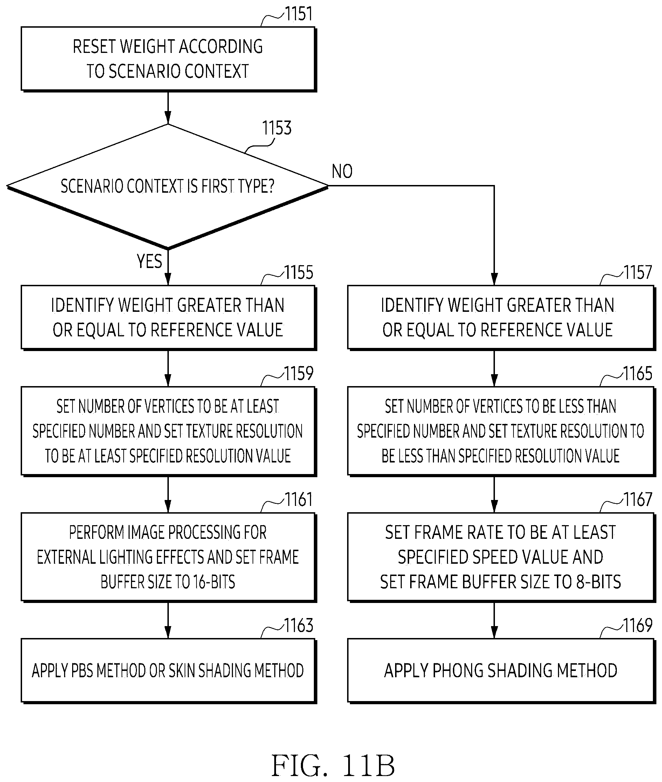

FIG. 11B illustrates a flow of an operation of an electronic device (e.g., the electronic device 101 of FIG. 1) for performing a rendering process according to a scenario context and a weight according to embodiments. Operations of the electronic device may be performed by at least one processor (e.g., the processor 120).

Referring to FIG. 11B, in an operation 1151, at least one processor (e.g., the processor 120 of FIG. 1) may reset a weight according to a scenario context. The at least one processor 120 may identify the changed weight for the portion in the object corresponding to the identified scenario context by referring to a mapping table. For example, when a scenario context for a sports match using an arm (e.g., tennis) is identified, a weight for a hand and a tennis racket may be written highly in the mapping table. For example, when a scenario context in which a target object (e.g., a cup) is handled through an object corresponding to a hand is identified, the weight for the target object and the hand may be written highly in the mapping table. For example, when a scenario context of communicating with another object through a voice is identified, a weight of a portion corresponding to a face of a user's avatar may be written in the mapping table as higher than a weight of a portion corresponding to another portion of the user's avatar. For example, when a scenario context for conversing through a gesture is identified, a weight for limbs and a torso may be written highly in the mapping table. For example, when a scenario context for conversation through sign language is identified, a weight for the hand may be written highly the mapping table.

In an operation 1153, the at least one processor 120 may identify whether the scenario context is a first type. In a case that the scenario context is the first type, the at least one processor 120 may perform an operation 1155. In a case that the scenario context is not the first type, the at least one processor 120 may perform an operation 1157. The at least one processor 120 may compare importance of a detail of the object and importance of a degree of correspondence between a movement of the object and a movement of an actual user. When the importance of the detail of the object is higher than the importance of the degree of correspondence, the scenario context may be identified as the first type for improving a detail of a portion having a weight greater than or equal to a reference value. When the importance of the degree of correspondence is higher than the importance of the detail of the object, the scenario context may be identified as the second type for improving a frame rate of a portion having a weight greater than or equal to the reference value.

In an operation 1159, the at least one processor 120 may set the number of vertices to be at least a specified number and set a texture resolution to be at least a specified resolution value. The at least one processor 120 may set the number of vertices of a mesh model to be at least a specified number based on the identification of the scenario context as the first type. This is because a rendering quality may improve as the number of vertices in the mesh model increases. The at least one processor 120 may set the texture resolution for the portion in the object having a weight greater than or equal to the reference value to be at least the specified resolution value in order to perform the first rendering process. The at least one processor 120 may improve a user experience by displaying a portion having the high weight in detail.

In an operation 1161, the at least one processor 120 may perform image processing for external lighting effects and set a frame buffer size to 16-bits. The at least one processor 120 may identify characteristics of external lighting such as a direction and brightness of lighting in an actual environment through a sensor. The at least one processor 120 may improve a rendering quality by applying the external lighting effects. The at least one processor 120 may use 16-bits for each channel of red (R), green (G), and blue (B) of a RGB method in a high dynamic range (HDR). A rendering quality of an image displayed through the high dynamic range (HDR) may be higher than a rendering quality of an image displayed through a low dynamic range (LDR).

In an operation 1163, the at least one processor 120 may apply a physically based shading (PBS) method or a skin shading method. The at least one processor 120 may perform image processing to express light reflection and skin according to a surface material in order to perform the first rendering process. The light reflection according to the surface material may be expressed based on the physically based shading (PBS) method. The skin may be expressed based on the skin shading method. A rendering resource used by the physically based shading (PBS) method may be greater than a rendering resource used by a phong shading method. A rendering resource used by the skin shading method may be greater than the rendering resource used by the phong shading method. The physically based shading (PBS) method and the skin shading method may have higher rendering quality than the phong shading method.

In an operation 1165, the at least one processor 120 may set the number of vertices to be less than a specified number, and set a texture resolution to be less than a specified resolution value. The texture resolution may be set to be less than a specified resolution value for the portion in the object having a weight greater than or equal to the reference value. This is because the rendering quality becomes lower as the texture resolution becomes lower, so that rendering resource may be secured.

In an operation 1167, the at least one processor 120 may set a frame rate to be at least a specified speed value and set a frame buffer size to 8-bits. The at least one processor 120 may increase a degree of correspondence between a movement of a user and a movement of a tracking avatar by setting the frame rate to be at least a specified speed value. As the frame rate becomes higher, the degree of correspondence between a movement of the user tracked and a movement of the avatar in the virtual image may become higher. The at least one processor 120 may decrease the rendering resource usage without applying the external lighting effects. The at least one processor 120 may use 8-bits for each channel of red (R), green (G), and blue (B) of the RGB method in low dynamic range (LDR). A rendering resource used while an image is displayed through the low dynamic range (LDR) may be smaller than a rendering resource used while an image is displayed through the high dynamic range (HDR).

In an operation 1169, the at least one processor 120 may apply the phong shading method. The at least one processor 120 may perform image processing to express light reflection according to a surface material in order to perform the second rendering process. The light reflection according to the surface material may be expressed based on the phong shading method. The rendering resource used by the phong shading method may be smaller than the rendering resource used by the skin shading method.

In embodiments, an electronic device 101 is provided. The electronic device may comprise memory 130 configured to store instructions, and at least one processor 120 operatively coupled to the memory 130. The at least one processor 120, when executing the instructions, may be configured to recognize an object corresponding to a user in an image frame provided by an application. The at least one processor 120 may identify a scenario context 401, 501, 601, 701, 801, 803, or 901 of the application. The at least one processor 120 may set a weight for each of a plurality of portions of the object based on the identified scenario context 401, 501, 601, 701, 801, 803, or 901. The at least one processor 120 may determine whether the scenario context 401, 501, 601, 701, 801, 803, or 901 is a first type or a second type. The at least one processor 120 may, in a case that the scenario context 501, 601, or 701 is the first type, perform a first rendering process on the image frame so as to improve a rendering quality of a portion that has a weight greater than a reference value, among the plurality of portions. The at least one processor 120 may, in a case that the scenario context 401, 801, 803, or 901 is the second type, perform a second rendering process on the image frame so as to increase a frame rate for the portion that has the weight greater than the reference value, among the plurality of portions. The frame rate may be the number of frames generated per unit time.

According to an embodiment, in order to perform the first rendering process, the at least one processor 120, when executing the instructions, may be configured to set the number of vertices of a mesh model corresponding to the portion, for the portion in the object having the weight greater than or equal to the reference value, to be at least a specified number. In order to perform the first rendering process, the at least one processor 120 may set a texture resolution of the portion having the weight greater than the reference value to be at least a specified resolution value. In order to perform the first rendering process, the at least one processor 120 may perform image processing for external lighting effects on the portion having the weight greater than the reference value. In order to perform the first rendering process, the at least one processor 120 may set a frame buffer size to 16-bits. In order to perform the first rendering process, the at least one processor 120 may perform image processing to express light reflection and skin according to a surface material for the portion having the weight greater than the reference value. The mesh model may be a method of representing a surface of an item (e.g., body, object) by means of the surface consisting of a plurality of polygons so as to display the object in three dimensions. The vertices may be points forming comers of the plurality of polygons.

According to an embodiment, in order to perform the second rendering process, the at least one processor 120, when executing the instructions, may be configured to set the frame rate to be at least a specified speed value. In order to perform the second rendering process, the at least one processor 120 may set the number of vertices of a mesh model corresponding to the portion having the weight greater than the reference value, for the portion having the weight greater than the reference value to be less than a specified number. In order to perform the second rendering process, the at least one processor 120 may set a texture resolution of the portion having the weight greater than the reference value to be less than a specified resolution value. In order to perform the second rendering process, the at least one processor 120 may set a frame buffer size to 8-bits for a portion having a weight greater than the reference value. In order to perform the second rendering process, the at least one processor 120 may perform image processing to express light reflection according to a surface material for the portion having the weight greater than the reference value. The mesh model may be a method of representing a surface of an item by means of the surface consisting of a plurality of polygons so as to display the object in three dimensions. The vertices may be points forming comers of the plurality of polygons.

According to an embodiment, in order to set the weight for each of the plurality of portions of the object, the at least one processor 120, when executing the instructions, may be configured to identify the weight for each of the plurality of portions of the object corresponding to the identified scenario context 401, 501, 601, 701, 801, 803, or 901 by referring to a mapping table.

According to an embodiment, the weight for a first portion among the plurality of portions of the object may be identified based on a weight for a second portion of the object that is connected to the first portion.

According to an embodiment, the weight for each of the plurality of portions of the object in a first frame may be identified based on the weight for each of the plurality of portions of the object in a second frame, which is a previous frame of the first frame.

According to an embodiment, the at least one processor 120, when executing the instructions, may be further configured to identify a weight of a tool object disposed outside an object corresponding to a body of an avatar. The at least one processor 120 may further, based on identifying that the scenario context 501, 601, or 701 is the first type, perform, in accordance with the weight greater than or equal to the reference value, the first rendering process so as to improve a rendering quality of a portion of the tool object that has the weight. The at least one processor 120 may further, based on identifying that the scenario context 401, 801, 803, or 901 is the second type, perform, in accordance with the weight greater than or equal to the reference value, the second rendering process so as to increase a frame rate of the portion of the tool object that has the weight greater than or equal to the reference value.

According to an embodiment, in a case of an interaction between the object and another object (e.g., the avatar 603) in the scenario context 601, 701, or 801, a weight for the another object (e.g., the avatar 603) being a target of the interaction, may be higher than a weight for another object (e.g., the avatar 605) not being a target of the interaction.

According to an embodiment, in a case of the interaction between the object and another object in the scenario context 401 or 501, a weight for a third portion among the plurality of portions may be higher than a weight for a fourth portion among the plurality of portions, and a frequency of movement of the third portion may be higher than a frequency of movement of the fourth portion.

According to an embodiment, a sum of the weights for the plurality of portions of the object may be a constant value.

In embodiments, a method by an electronic device is provided. The method may comprise recognizing an object corresponding to a user in an image frame provided by an application. The method may comprise identifying a scenario context 401, 501, 601, 701, 801, 803, or 901 of the application. The method may comprise setting a weight for each of a plurality of portions of the object based on the identified scenario context 401, 501, 601, 701, 801, 803, or 901. The method may comprise determining whether the scenario context 401, 501, 601, 701, 801, 803, or 901 is a first type or a second type. The method may comprise, in a case that the scenario context 501, 601, or 701 is the first type, performing a first rendering process on the image frame so as to improve a rendering quality of a portion that has a weight greater than a reference value, among the plurality of portions. The method may comprise, in a case that the scenario context 401, 801, 803, or 901 is the second type, performing a second rendering process on the image frame so as to increase a frame rate for the portion that has the weight greater than the reference value, among the plurality of portions. The frame rate may be the number of frames generated per unit time.

According to an embodiment, performing the first rendering process may comprise setting the number of vertices of a mesh model corresponding to the portion, for the portion in the object having the weight greater than or equal to the reference value, to be less than a specified number. Performing the first rendering process may comprise setting a texture resolution to be at least a specified resolution value. The method may comprise performing image processing for external lighting effects. The method may comprise setting a frame buffer size to 16-bits. The method may comprise performing image processing to express light reflection and skin according to a surface material. The mesh model may be a method of representing a surface of an item by means of the surface consisting of a plurality of polygons so as to display the object in three dimensions. The vertices may be points forming corners of the plurality of polygons.

According to an embodiment, the performing the second rendering process may comprise setting the frame rate to be at least a specified speed value, for the portion in the object having the weight greater than or equal to the reference value. The performing the second rendering process may comprise setting the number of vertices of the mesh model corresponding to the portion having the weight greater than the reference value, for the portion having the weight greater than the reference value, to be less than a specified number. The method may comprise setting a texture resolution to be less than a specified resolution value. The method may comprise setting a frame buffer size to 8-bits. The method may comprise performing image processing to express light reflection according to a surface material. The mesh model may be a method of representing a surface of an item by means of the surface consisting of a plurality of polygons so as to display the object in three dimensions. The vertices may be points forming corners of the plurality of polygons.

According to an embodiment, setting the weight for each of the plurality of portions of the object may comprise identifying the weight for each of the plurality of portions of the object, corresponding to the identified scenario context 401, 501, 601, 701, 801, 803, or 901 with reference to a mapping table.

According to an embodiment, the weight for a first portion among the plurality of portions of the object may be identified based on a weight for a second portion of the object that is connected to the first portion.

According to an embodiment, the weight for each of the plurality of portions of the object in a first frame may be identified based on the weight for each of the plurality of portions of the object in a second frame, which is a previous frame of the first frame.

According to an embodiment, the method may comprise identifying a weight of a tool object disposed outside an object corresponding to a body of an avatar additionally. The method may comprise, based on identifying that the scenario context 501, 601, or 701 is the first type, performing, in accordance with the weight greater than or equal to the reference value, the first rendering process so as to improve a rendering quality of a portion of the tool object that has the weight greater than or equal to the reference value. The method may comprise, based on identifying that the scenario context 401, 801, 803, or 901 is the second type, performing, in accordance with the weight greater than or equal to the reference value, the second rendering process so as to increase a frame rate of the portion of the tool object that has the weight greater than or equal to the reference value.

According to an embodiment, in a case of an interaction between the object and another object in the scenario context 601, 701, or 801, a weight for the another object being a target of the interaction, may be higher than a weight for another object not being a target of the interaction.

According to an embodiment, in a case of the interaction between the object and another object in the scenario context 401 or 501, a weight for a third portion among the plurality of portions may be higher than a weight for a fourth portion among the plurality of portions, and a frequency of movement of the third portion may be higher than a frequency of movement of the fourth portion.

According to an embodiment, a sum of the weights for the plurality of portions of the object may be a constant value.

In embodiments, a non-transitory storage medium is provided. The non-transitory storage medium may comprise memory configured to store instructions. The instructions, when executed by at least one processor, may cause the electronic device to recognize an object corresponding to a user in an image frame provided by an application, identify a scenario context of the application, set a weight for each of a plurality of portions of the object based on the scenario context, determine whether the scenario context is a first type or a second type, in a case that the scenario context is the first type, perform a first rendering process on the image frame so as to improve a rendering quality of a portion that has a weight greater than a reference value, among the plurality of portions, and in a case that the scenario context is the second type, perform a second rendering process on the image frame so as to increase a frame rate for the portion that has the weight greater than the reference value, among the plurality of portions.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101), comprising:

    memory (130) configured to store instructions; and
    at least one processor (120) operatively coupled to the memory (130),
    wherein the at least one processor (120), when executing the instructions, is configured to:

    recognize an object corresponding to a user in an image frame provided by an application;
    identify a scenario context (401;501;601;701;801;803;901) of the application;
    set a weight for each of a plurality of portions of the object based on the identified scenario context (401;501;601;701;801;803;901);
    determine whether the scenario context (401;501;601;701;801;803;901) is a first type or a second type;
    in a case that the scenario context (501;601;701) is the first type, perform a first rendering process on the image frame so as to improve a rendering quality of a portion that has a weight greater than a reference value, among the plurality of portions; and
    in a case that the scenario context (401;801;803;901) is the second type, perform a second rendering process on the image frame so as to increase a frame rate for the portion that has the weight greater than the reference value, among the plurality of portions.

2. The electronic device of claim 1,
    wherein, in order to perform the first rendering process, the at least one processor (120), when executing the instructions, is configured to:

    set the number of vertices of a mesh model corresponding to the portion having the weight greater than the reference value to be at least a specified number;
    set a texture resolution of the portion having the weight greater than the reference value to be at least a specified resolution value;
    perform image processing for external lighting effects on the portion having the weight greater than the reference value; and
    perform image processing to express light reflection and skin according to a surface material for the portion having the weight greater than the reference value,
    wherein the mesh model is a method of representing a surface of an item by means of the surface consisting of a plurality of polygons so as to display the object in three dimensions, and
    wherein the vertices are points forming corners of the plurality of polygons.

**3.** The electronic device of claims 1 to 2,
wherein, in order to perform the second rendering process, the at least one processor (120), when executing the instructions, is configured to:

set a frame rate to be at least a specified speed value;
set the number of vertices of a mesh model corresponding to the portion having the weight greater than the reference value to be less than a specified number;
set a texture resolution of the portion having the weight greater than the reference value to be less than a specified resolution value; and
perform image processing to express light reflection according to a surface material for the portion having the weight greater than the reference value,
wherein the mesh model is a method of representing a surface of an item by means of the surface consisting of a plurality of polygons so as to display the object in three dimensions, and
wherein the vertices are points forming corners of the plurality of polygons.

**4.** The electronic device of claims 1 to 3,
wherein, in order to set the weight for each of the plurality of portions of the object, the at least one processor (120), when executing the instructions, is configured to:
identify the weight for each of the plurality of portions of the object corresponding to the identified scenario context (401;501;601;701;801;803;901) by referring to a mapping table.

**5.** The electronic device of claims 1 to 4,
wherein the weight for a first portion among the plurality of portions of the object is identified based on a weight for a second portion of the object that is connected to the first portion.

**6.** The electronic device of claims 1 to 5,
wherein the weight for each of the plurality of portions of the object in a first frame is identified based on the weight for each of the plurality of portions of the object in a second frame, which is a previous frame of the first frame.

**7.** The electronic device of claims 1 to 6,
wherein the at least one processor (120), when executing the instructions, is further configured to:

identify a weight of a tool object disposed outside an object corresponding to a body of an avatar additionally;
based on identifying that the scenario context (501;601;701) is the first type, perform, in accordance with the weight greater than or equal to the reference value, the first rendering process so as to improve a rendering quality of a portion of the tool object that has the weight greater than or equal to the reference value; and
based on identifying that the scenario context (401;801;803;901) is the second type, perform, in accordance with the weight greater than or equal to the reference value, the second rendering process so as to increase a frame rate of the portion of the tool object that has the weight greater than or equal to the reference value.

**8.** The electronic device of claims 1 to 7,
wherein, in a case of an interaction between the object and another object (603) in the scenario context (601;701;801), a weight for the another object (603) being a target of the interaction, is higher than a weight for another object (605) not being a target of the interaction.

**9.** The electronic device of claims 1 to 8,

wherein, in a case of the interaction between the object and another object in the scenario context (401;501), a weight for a third portion among the plurality of portions is higher than a weight for a fourth portion among the plurality of portions, and
wherein a frequency of movement of the third portion is higher than a frequency of movement of the fourth portion.

**10.** The electronic device of claims 1 to 9,
wherein a sum of the weights for the plurality of portions of the object is a constant value.

**11.** A method performed by an electronic device comprising:

recognizing an object corresponding to a user in an image frame provided by an application;

identifying a scenario context (401;501;601;701;801;803;901) of the application;

setting a weight for each of a plurality of portions of the object based on the identified scenario context (401;501;601;701;801;803;901);

determining whether the scenario context (401;501;601;701;801;803;901) is a first type or a second type;

in a case that the scenario context (501;601;701) is the first type, performing a first rendering process on the image frame so as to improve a rendering quality of the portion that has a weight greater than a reference value, among the plurality of portions; and

in a case that the scenario context (401;801;803;901) is the second type, performing a second rendering process on the image frame so as to increase a frame rate for the portion that has the weight greater than the reference value, among the plurality of portions.

12. The method of claim 11,
wherein performing the first rendering process comprises:

setting the number of vertices of a mesh model corresponding to the portion having the weight greater than the reference value to be less than a specified number;

setting a texture resolution of the portion having the weight greater than the reference value to be at least a specified resolution value;

performing image processing for external lighting effects for the portion having the weight greater than the reference value; and

performing image processing to express light reflection and skin according to a surface material for the portion having the weight greater than the reference value,

wherein the mesh model is a method of representing a surface of an item by means of the surface consisting of a plurality of polygons so as to display the object in three dimensions, and

wherein the vertices are points forming corners of the plurality of polygons.

13. The method of claims 11 to 12,
wherein the performing the second rendering process comprises:

setting the frame rate to be at least a specified speed value;

for the portion having the weight greater than the reference value,

setting the number of vertices of the mesh model corresponding to the portion having the weight greater than the reference value to be less than a specified number;

setting a texture resolution of the portion having the weight greater than the reference value to be less than a specified resolution value; and

performing image processing to express light reflection according to a surface material for the portion having the weight greater than the reference value,

wherein the mesh model is a method of representing a surface of an item by means of the surface consisting of a plurality of polygons so as to display the object in three dimensions, and

wherein the vertices are points forming corners of the plurality of polygons.

14. The method of claims 11 to 13,
wherein the weight for a first portion among the plurality of portions of the object is identified based on a weight for a second portion of the object that is connected to the first portion.

15. A non-transitory storage medium comprising:

memory configured to store instructions,

wherein the instructions, when executed by at least one processor, cause the electronic device to recognize an object corresponding to a user in an image frame provided by an application;

identify a scenario context (401;501;601;701;801;803;901) of the application;

set a weight for each of a plurality of portions of the object based on the identified scenario context (401;501;601;701;801;803;901);

determine whether the scenario context (401;501;601;701;801;803;901) is a first type or a second type;

in a case that the scenario context (501;601;701) is the first type, perform a first rendering process on the image frame so as to improve a rendering quality of a portion that has a weight greater than a reference value, among the plurality of portions; and

in a case that the scenario context (401;801;803;901) is the second type, perform a second rendering process on the image frame so as to increase a frame rate for the portion that has the weight greater than the reference value, among the plurality of portions.

100

ELECTRONIC DEVICE 101

| INPUT MODULE 150 | | | | PROGRAM 140 |
| SOUND OUTPUT MODULE 155 | DISPLAY MODULE 160 | | | APPLICATION 146 |

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

PROCESSOR 120

MAIN PROCESSOR 121

AUXILIARY PROCESSOR 123

POWER MANAGE-MENT MODULE 188

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

SECOND NETWORK 199

FIRST NETWORK 198

ELECTRONIC DEVICE 102

ELECTRONIC DEVICE 104

SERVER 108

FIG. 1

FIG. 2

301

303

FIG. 3A

FIG. 3B

331

333

FIG. 3C

FIG. 3D

FIG. 4

FIG. 5

FIG. 6

FIG. 7

FIG. 8

901

Search Site

CONNECTION
Wi-Fi · BLUETOOTH · AIRPLANE MODE

SOUND AND VIBRATION
SOUND MODE · RING TONE

NOTICE
STATUS BAR · DO NOT DISTURB

LOCATION WHERE MISSING
PUPPY WAS FOUND?
22.04.19 TUESDAY

K-MOVIE THAT EXPANDED
INTO HOLLYWOOD
22.04.19 TUESDAY

911

903

FIG. 9

FIG. 10

~1101

IDENTIFY WEIGHT

~1103

ADJUST WEIGHT
OF SPECIFIC POINT

~1105

ADJUST WEIGHT
OF CONNECTED POINT

~1107

IDENTIFY WEIGHT BASED ON
EXISTING WEIGHTS AT
SPECIFIC POINT

~1109

IDENTIFY WEIGHT BASED ON
EXISTING WEIGHTS OF
CONNECTED POINT

~1111

NORMALIZE
OVERALL WEIGHTS

FIG. 11A

RESET WEIGHT ACCORDING
TO SCENARIO CONTEXT — 1151

SCENARIO CONTEXT IS FIRST TYPE? 1153

NO

YES

IDENTIFY WEIGHT GREATER THAN
OR EQUAL TO REFERENCE VALUE — 1155

IDENTIFY WEIGHT GREATER THAN
OR EQUAL TO REFERENCE VALUE — 1157

SET NUMBER OF VERTICES TO BE AT LEAST
SPECIFIED NUMBER AND SET TEXTURE RESOLUTION
TO BE AT LEAST SPECIFIED RESOLUTION VALUE — 1159

SET NUMBER OF VERTICES TO BE LESS THAN
SPECIFIED NUMBER AND SET TEXTURE RESOLUTION TO
BE LESS THAN SPECIFIED RESOLUTION VALUE — 1165

PERFORM IMAGE PROCESSING FOR
EXTERNAL LIGHTING EFFECTS AND SET FRAME
BUFFER SIZE TO 16-BITS — 1161

SET FRAME RATE TO BE AT LEAST
SPECIFIED SPEED VALUE AND
SET FRAME BUFFER SIZE TO 8-BITS — 1167

APPLY PBS METHOD OR SKIN SHADING METHOD — 1163

APPLY PHONG SHADING METHOD — 1169

FIG. 11B

## INTERNATIONAL SEARCH REPORT

| | International application No. |
| --- | --- |
| | **PCT/KR2023/015364** |

| A. | CLASSIFICATION OF SUBJECT MATTER |
| --- | --- |

**G06T 15/00**(2006.01)i; **G06T 15/80**(2011.01)i; **G06T 15/04**(2011.01)i; **G06T 17/20**(2006.01)i; **G06T 1/20**(2006.01)i; **G06T 1/60**(2006.01)i; **G06T 15/50**(2006.01)i

According to International Patent Classification (IPC) or to both national classification and IPC

| B. | FIELDS SEARCHED |
| --- | --- |

Minimum documentation searched (classification system followed by classification symbols)

G06T 15/00(2006.01); G06F 15/16(2006.01); G06T 1/00(2006.01); H04N 13/30(2018.01); H04N 19/134(2014.01); H04N 19/17(2014.01); H04N 5/14(2006.01); H04W 4/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 컨텍스트(context), 객체(object), 가중치(weight), 렌더링(rendering), 퀄리티(qualify), 프레임(frame), 속도(speed), 레이트(rate), 텍스처(texture), 해상도(resolution)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2010-250774 A (FUJIFILM CORP.) 04 November 2010 (2010-11-04) <br> See claims 1-2. | 1-15 |
| A | KR 10-2012-0078838 A (SAMSUNG ELECTRONICS CO., LTD.) 11 July 2012 (2012-07-11) <br> See claims 9 and 11. | 1-15 |
| A | KR 10-2003-0040974 A (LG ELECTRONICS INC.) 23 May 2003 (2003-05-23) <br> See claims 1-6. | 1-15 |
| A | KR 10-2018-0082253 A (SAMSUNG ELECTRONICS CO., LTD.) 18 July 2018 (2018-07-18) <br> See claims 1-26. | 1-15 |
| A | KR 10-2016-0084216 A (ENTRIX CO., LTD.) 13 July 2016 (2016-07-13) <br> See claims 1-18. | 1-15 |

☐ Further documents are listed in the continuation of Box C.          ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **24 January 2024** | **24 January 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015364**

| Patent document cited in search report | | | Publication date (day/month/year) | Patent family member(s) | | | Publication date (day/month/year) |
|---|---|---|---|---|---|---|---|
| JP | 2010-250774 | A | 04 November 2010 | JP | 2010-250774 | A | 04 November 2010 |
| KR | 10-2012-0078838 | A | 11 July 2012 | US | 2012-0169828 | A1 | 05 July 2012 |
| KR | 10-2003-0040974 | A | 23 May 2003 | EP | 1313322 | A2 | 21 May 2003 |
| | | | | EP | 1313322 | A3 | 01 September 2004 |
| | | | | US | 2003-0095599 | A1 | 22 May 2003 |
| | | | | US | 7027506 | B2 | 11 April 2006 |
| KR | 10-2018-0082253 | A | 18 July 2018 | EP | 3346371 | A1 | 11 July 2018 |
| | | | | EP | 3346371 | B1 | 31 March 2021 |
| | | | | US | 10331208 | B2 | 25 June 2019 |
| | | | | US | 2018-0196512 | A1 | 12 July 2018 |
| KR | 10-2016-0084216 | A | 13 July 2016 | None | | | |

Form PCT/ISA/210 (patent family annex) (July 2022)